# EUROPEAN PATENT APPLICATION

(11) **EP 4 625 854 A1**
(43) Date of publication of application: **01.10.2025**
(21) Application number: 22966225.9
(22) Date of filing: 25.11.2022
(51) Int. Cl.: H04K 3/00

(54) **COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: GAN, Lu, Dongguan, Guangdong 523860 (CN); LIU, Qiao, Dongguan, Guangdong 523860 (CN); CAO, Jin, Dongguan, Guangdong 523860 (CN); SHI, Cong, Dongguan, Guangdong 523860 (CN); NIU, Yongfeng, Dongguan, Guangdong 523860 (CN)
(74) Representative: Mewburn Ellis LLP
(86) International application number: PCT/CN2022/134274
(87) International publication number: WO 2024/108534

(57) **Abstract**

The present disclosure relates to a communication method, a device, a computer-readable storage medium, a computer program product, and a computer program. The method includes: receiving, by a first device, a wireless signal; and obtaining, by the first device, data reported by a second device by removing an interference signal from the wireless signal according to first information, where the first information is associated with the interference signal.

## Description

### TECHNICAL FIELD

The present disclosure relates to the field of communications, and more specifically, to a communication method, a device, a computer-readable storage medium, a computer program product, and a computer program.

### BACKGROUND

In the related art, terminal devices, especially zero-power terminals, may need to report data to a network device. However, in the scenario where the zero-power terminal reports data to the network device, how to ensure the security of the data reported by the zero-power terminal becomes a problem that needs to be solved.

### SUMMARY

Embodiments of the present disclosure provide a communication method, a device, a computer-readable storage medium, a computer program product, and a computer program.

Embodiments of the present disclosure provide a communication method, including: receiving, by a first device, a wireless signal; and obtaining, by the first device, data reported by a second device by removing an interference signal from the wireless signal according to first information, where the first information is associated with the interference signal.

Embodiments of the present disclosure provide a communication method, including: reporting, by a second device, data to the first device, where the data is used to be mixed with an interference signal during transmission to obtain a wireless signal.

Embodiments of the present disclosure provide a communication method, including: transmitting, by a third device, an interference signal, where the interference signal is associated with first information, and the interference signal is used to interfere with data reported by a second device.

Embodiments of the present disclosure provide a first device, including: a first communication unit configured to receive a wireless signal; and a first processing unit configured to obtain data reported by a second device by removing an interference signal from the wireless signal according to first information, where the first information is associated with the interference signal.

Embodiments of the present disclosure provide a second device, including: a second communication unit configured to report data to a first device, where the data is used to be mixed with an interference signal during transmission to obtain a wireless signal.

Embodiments of the present disclosure provide a third device, including: a third communication unit configured to transmit an interference signal, where the interference signal is associated with first information, and the interference signal is used to interfere with data reported by a second device.

Embodiments of the present disclosure provide a first device including a processor and a memory, where the memory is configured to store a computer program, and the processor is configured to call and run the computer program stored in the memory, so that the first device executes the above method.

Embodiments of the present disclosure provide a second device including a processor and a memory, where the memory is configured to store a computer program, and the processor is configured to call and run the computer program stored in the memory, so that the second device executes the above method.

Embodiments of the present disclosure provide a third device including a processor and a memory, where the memory is configured to store a computer program, and the processor is configured to call and run the computer program stored in the memory, so that the third device executes the above method.

Embodiments of the present disclosure provide a chip configured to implement the above method. Specifically, the chip includes a processor configured to call and run a computer program from a memory, so that a device equipped with the chip executes the above method.

Embodiments of the present disclosure provide a computer-readable storage medium configured to store a computer program. When the computer program is executed by a device, the device executes the above method.

Embodiments of the present disclosure provide a computer program product including computer program instructions, where the computer program instructions enable a computer to execute the above method.

Embodiments of the present disclosure provide a computer program which, when executed on a computer, enables the computer to execute the above method.

In the solution provided in the embodiments, the interference signal is mixed in the wireless signal received by the first device, and after the first device removes the interference signal from the wireless signal according to the first information, the first device can obtain the data reported by the second device, where the first information is associated with the interference signal. In this way, the data reported by the second device is mixed with the interference signal during transmission. Since the first device has prior knowledge of the first information associated with the interference signal, the first device can remove the interference signal and correctly obtain the data reported by the second device. In contrast, other eavesdropping devices eavesdropping on the data reported by the second device cannot know the first information in advance, so other eavesdropping devices cannot correctly parse and obtain the data reported by the second device. It can be seen that, the solution provided in the embodiments can ensure the security of the data reported by the second device.

### BRIEF DESCRIPTION OF THE DRAWINGS

FIG. 1 is a schematic diagram of an application scenario according to embodiments of the present disclosure.
FIG. 2 is a schematic diagram of a backscatter-based zero-power communication system.
FIG. 3 is a schematic diagram illustrating a processing scenario of transmitting a reflected signal based on a carrier in a backscatter-based zero-power communication system.
FIG. 4 is a schematic flow chart of a communication method according to an embodiment of the present disclosure.
FIG. 5 is a schematic flow chart of a communication method according to another embodiment of the present disclosure.
FIG. 6 is a schematic flow chart of a communication method according to yet another embodiment of the present disclosure.
FIG. 7 is a schematic diagram of a first data frame according to an embodiment of the present disclosure.
FIG. 8 is a schematic diagram of a processing scenario of data transmission and reception according to an embodiment of the present disclosure.
FIG. 9 to FIG. 14 are various exemplary flow charts illustrating processing of communication methods according to embodiments of the present disclosure.
FIG. 15 is a schematic flow chart of a simulation test of a communication method according to embodiments of the present disclosure.
FIG. 16 is a schematic diagram illustrating a scenario of a cellular and/or sidelink communication-based hybrid zero-power communication system according to an embodiment of the present disclosure.
FIG. 17 is a schematic block diagram of a first device according to an embodiment of the present disclosure.
FIG. 18 is a schematic block diagram of a second device according to an embodiment of the present disclosure.
FIG. 19 is a schematic block diagram of a second device according to another embodiment of the present disclosure.
FIG. 20 is a schematic block diagram of a third device according to an embodiment of the present disclosure.
FIG. 21 is a schematic block diagram of a third device according to another embodiment of the present disclosure.
FIG. 22 is a schematic block diagram of a communication device according to embodiments of the present disclosure.
FIG. 23 is a schematic block diagram of a chip according to embodiments of the present disclosure.
FIG. 24 is a schematic block diagram of a communication system according to embodiments of the present disclosure.

### DETAILED DESCRIPTION

The technical solutions in the embodiments of the present disclosure will be described below in conjunction with the accompanying drawings in the embodiments of the present disclosure.

The technical solutions of the embodiments of the present disclosure can be applied to various communication systems, such as: a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolved system of the NR system, a LTE-based access to unlicensed spectrum (LTE-U) system, an NR-based access to unlicensed spectrum (NR-U) system, a non-terrestrial networks (NTN) system, a universal mobile telecommunication system (UMTS), wireless local area networks (WLAN), wireless fidelity (WiFi), a 5th-generation (5G) system, and other communication systems.

Generally speaking, traditional communication systems support a limited number of connections and are easy to implement. However, with the development of communication technology, mobile communication systems will not only support traditional communications, but will also support, for example, device to device (D2D) communication, machine to machine (M2M) communication, machine type communication (MTC), vehicle to vehicle (V2V) communication, vehicle to everything (V2X) communication, etc. The embodiments of the present disclosure can also be applied to these communication systems.

In a possible implementation, the communication system in the embodiments of the present disclosure can be applied to a carrier aggregation (CA) scenario, can also be applied to a dual connectivity (DC) scenario, and can also be applied to a standalone (SA) scenario.

In a possible implementation, the communication system in the embodiments of the present disclosure can be applied to an unlicensed spectrum, where the unlicensed spectrum can also be considered as a shared spectrum; or, the communication system in the embodiments of the present disclosure can also be applied to an authorized spectrum, where the authorized spectrum can also be considered as an unshared spectrum.

Various embodiments of the present disclosure are described in conjunction with a network device and a terminal device. The terminal device may also be referred to as a user equipment (UE), an access terminal, a user unit, a user station, a mobile station, a remote station, a remote terminal, a mobile device, a user terminal, a terminal, a wireless communication device, a user agent or user device, etc.

The terminal device may be a station (ST) in a WLAN, may be a cellular phone, a cordless phone, a session initiation protocol (SIP) phone, a wireless local ;oop (WLL) station, a personal digital assistant (PDA) device, a handheld device with wireless communication functions, a computing device or other processing device connected to a wireless modem, a vehicle-mounted device, a wearable device, a terminal device in a next-generation communication system such as an NR network, a terminal device in a future evolved public land mobile network (PLMN) network, etc.

In the embodiments of the present disclosure, the terminal device can be deployed on land, including indoors or outdoors, handheld, wearable or vehicle-mounted; can also be deployed on water (such as a ship, etc.); can also be deployed in the air (for example, on an airplane, a balloon, a satellite, etc.).

In the embodiments of the present disclosure, the terminal device may be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medical, a wireless terminal device in a smart grid, a wireless terminal device in transportation safety, a wireless terminal device in a smart city, a wireless terminal device in a smart home, etc.

As an example but not limitation, in the embodiments of the present disclosure, the terminal device may also be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In the embodiments of the present disclosure, the network device may be a device configured to communicate with a mobile device, and the network device may be an access point (AP) in a WLAN, a base transceiver station (BTS) in GSM or CDMA, or may be a Node B (NB) in WCDMA, or may be an evolutional Node B (eNB or eNodeB), a relay station or AP, an in-vehicle device, or a wearable device in LTE, a network device (gNB) in an NR network, a network device in a future evolved PLMN, or a network device in an NTN, etc.

As an example but not limitation, in embodiments of the present disclosure, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water.

In the embodiments of the present disclosure, the network device can serve a cell, and the terminal device can communicate with the network device over a transmission resource (for example, a frequency-domain resource or a spectrum resource) for the cell. The cell may be a cell corresponding to the network device (for example, a base station). The cell may belong to a macro base station, or may belong to a base station corresponding to a small cell. The small cell may include: a metro cell, a micro cell, a pico cell, a femto cell, and the like. These small cells are characterized by small coverage and low transmission power and are adapted to provide data transmission service with high-rate.

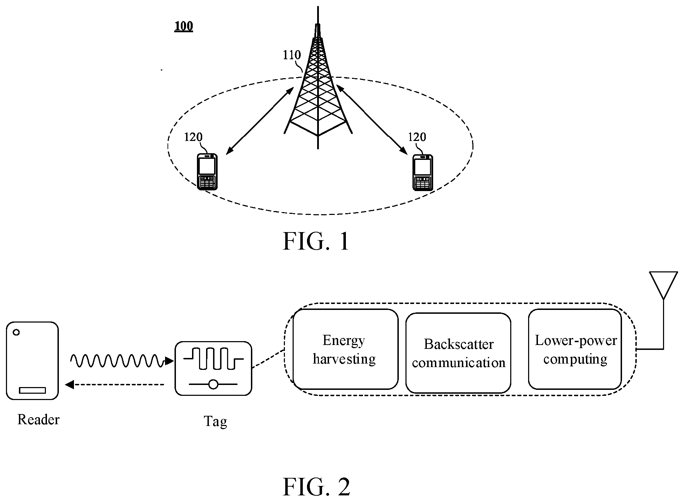

FIG. 1 exemplarily illustrates a communication system 100. The communication system includes a network device 110 and two terminal devices 120. In a possible implementation, the communication system 100 may include multiple network devices 110, and each network device 110 may include other number of terminal devices 120 within a coverage area of each network device 100, which is not limited in the embodiments of the present disclosure.

In a possible implementation, the communication system 100 may also include other network entities such as a mobility management entity (MME) and an access and mobility management function (AMF), which is not limited in the embodiments of the present disclosure.

The network device may include an access network device and a core network device. That is, the wireless communication system may also include multiple core networks for communicating with the access network device. The access network device may be an evolutional node B (eNB or e-NodeB for short), a macro base station, a micro base station (also called "small base station"), a pico base station, an AP, a transmission point (TP) or a new generation Node B (gNodeB) in an LTE system, a next-generation (mobile communication system) (NR) system or an authorized auxiliary access long-term evolution (LAA-LTE) system.

It may be understood that, the devices with communication functions in the network/system in the embodiments of the present disclosure may be called communication devices. Taking the communication system as illustrated in FIG. 1 as an example, the communication devices may include a network device and a terminal device with communication functions. The network device and the terminal device may be specific devices in the embodiments of the present disclosure, which will not be repeated here. The communication device may also include other devices in the communication system, such as a network controller, an MME, etc., which is not limited in the embodiment of the present disclosure.

In order to facilitate understanding of the embodiments of the present disclosure, the basic processes and basic concepts involved in the embodiments of the present disclosure are briefly described below. It may be understood that, the basic processes and basic concepts introduced below do not construct a limitation on the embodiments of the present disclosure.

Internet of things (IoT) scenarios may suffer from extreme environments such as high temperature, extremely low temperature, high humidity, high pressure, high radiation or high-speed movement. For example, there may be ultra-high voltage power stations, high-speed train track monitoring, high-cold zone environmental monitoring, industrial production lines, etc. In these scenarios, IoT terminals cannot be operated due to operating environment restrictions of conventional power supplies. In addition, extreme operating environments are not conducive to IoT maintenance, such as battery replacement. Some IoT communication scenarios, such as food traceability, commodity circulation, and smart wearables, require terminals to have extremely small sizes to facilitate use in these scenarios. For example, IoT terminals used for commodity management in the circulation link usually use electronic tags and are embedded in commodity packaging in a very small form. For another example, lightweight wearable devices can improve user experience while meeting user needs. Many IoT communication scenarios require that the cost of IoT terminals is low enough to enhance competitiveness compared with other alternative technologies. For example, in logistics or warehousing scenarios, in order to facilitate the management of a large number of circulation items, IoT terminals can be attached to each item, so that the entire process and cycle of logistics can be accurately managed through communication between the terminal and the logistics network. These scenarios require that the price of IoT terminals is sufficiently competitive.

A zero-power communication network is a wireless communication technology suitable for short distance and low rate. In a zero-power device, radio frequency (RF) energy harvesting technology, backscatter technology, and low-power computing technology are mainly combined to achieve the advantage that the device node does not need to carry a power supply. The basic architecture of the zero-power system is as illustrated in FIG. 2, which includes a reader (a tag reader) and a tag. The tag can have functions such as energy harvesting, backscatter communication, and low-power computing. The tag is a type of zero-power terminal. It may be understood that, in actual scenarios, the zero-power terminal may be a tag or an ordinary device, which is not limited here.

The outstanding technical advantage of zero-power communication is battery-free communication. Due to the use of key technologies such as RF energy harvesting, backscatter, and low-power computing, the terminal can be battery-free and support extremely low hardware complexity. Therefore, zero-power communication can meet the requirements of ultra-low power consumption, extremely small size, and extremely low cost. It may be foreseeable that, zero-power technology will have significant application advantages in a wide range of application fields, for example, industrial wireless sensor network, smart transportation, smart logistics, smart warehousing, smart agriculture, smart cities, energy and other applications for vertical industries, as well as smart wear, smart home, and medical care for individual consumers. In this section, we will select some typical scenarios to illustrate the application potential of zero-power communication in these fields.

In the case where the reader is a network device, its requirements (or characteristics) are as follows:
Cellular-based infrastructure and flexible deployment: for example, it can be deployed on an outdoor pole station or indoors spaced apart from a digital indoor system (DIS)-based station, to provide basic coverage; for example, it can be deployed as needed to fill coverage gaps or extend coverage;
Coverage requirements: the coverage distance for a single station is required to exceed 30m indoors and exceed 100m outdoors;
Network security: privacy and data security are protected based on authorized tag reading;
Connection requirements: it can support sufficient system capacity to support data reading from a large number of terminals.

The characteristics of zero-power terminals, zero-power devices, or zero-power IoT terminals include but are not limited to the following:
Power consumption: it may be less than 1mw, passive and battery-free, and maintenance-free;
Operating environment: it needs to be able to adapt to special environments, such as being able to operate normally in special environments such as high temperature, high pressure, extreme cold, radiation, etc.
Size: it may be extremely compact to facilitate large-scale application;
Communication distance: it can achieve a range of tens of meters to hundreds of meters;
Material Type: it can include paper-based tags and anti-metal tags.

It may be understood that, the above only describes the application scenarios of industrial wireless sensor network (IWSN), and the application scenarios of IWSN may also include other requirements, but they are not exhaustive here. In addition, in other application scenarios, there may be differences from the requirements of IWSN. For example, in the application scenarios of smart logistics and smart warehousing, there may be connection requirements (due to the large number of goods, a large number of tags need to be detected at the same time, so it may be necessary to achieve thousands of connections per second); for example, in the application scenarios of smart homes, there may be communication delay requirements (smart home appliance adjustment: ten milliseconds to hundreds of milliseconds; home positioning: hundreds of milliseconds to seconds), and the requirements for excitation signals (taking signals of smart devices in the home, such as smart phones, customer premise equipment (CPE), and WIFI, as energy excitation signals for passive terminals, without the need for additional excitation signals, simplifying the network layout), etc., which are not exhaustive here.

In a backscatter-based zero-power communication system, a backscatter transmitter of a zero-power device can modulate and reflect received RF signals to transmit data instead of generating RF signals by itself. This technology has been widely used in practical production, such as radio frequency identification (RFID), tracking devices, remote switches, medical telemetry, low-cost sensor networks, etc.

Specifically, the zero-power terminal has three main modules: energy harvesting, backscatter, and low-power computing.

Energy harvesting can also be called RF energy harvesting, where the core of energy harvesting is to convert RF energy into direct current (DC), energy can be stored in a batter(ies) or a capacitor(s), or after harvesting energy, the energy can be directly used to drive a logic circuit(s), a digital chip(s), or a sensor(s), etc., to complete the modulation and transmission of backscatter signals, the collection and processing of sensor information and other functions and applications. The basic principle of RF energy harvesting is to harvest electromagnetic wave energy in space through electromagnetic induction. The essence of RF energy harvesting is to convert RF energy into DC voltage. In the case of being applied to zero-power communication, the core requirement of RF energy harvesting is to effectively use harvested energy to drive a load circuit (low-power computing, a sensor(s), etc.) to achieve battery-free communication.

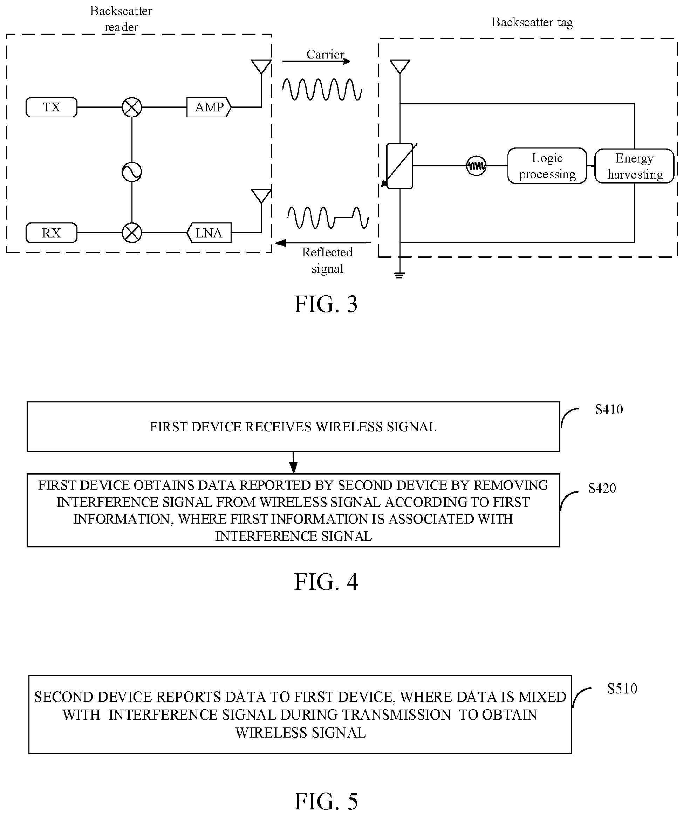

Backscatter technology is a type of wireless technology that can achieve signal transmission and coding without an active transmitter. Similar to the principle of radar, a part of electromagnetic waves may be reflected when the electromagnetic waves reach a surface of an object. The strength of the reflected signal depends on the shape and material of the object and a distance relative to the object. From the perspective of radar, each object has its radar cross-section. The tag modulates reflected signals by changing its radar cross-section. A backscatter transmitter modulates received RF signals to transmit data without generating RF signals by itself. For example, in conjunction with FIG. 3, a backscatter tag is a zero-power terminal. A backscatter reader transmits RF signals to the backscatter tag over a carrier through a transmitter (TX) and an amplifier (AMP). After receiving the carrier, the backscatter tag acquires energy through its energy harvesting function, drives its own logic processing module through the energy, and then transmits data to be transmitted to the backscatter reader through reflected signals. The backscatter reader receives the data through a low noise amplifier (LNA) and a receiver (RX).

The conversion rate of RF energy is often less than 10%, which determines that power consumption required to drive a digital logic circuit or chip for calculations cannot be too high. Although the number of times each microjoule of energy can be used for calculations has increased with the improvement of processes and optimization of designs, it still cannot meet the needs of complex calculations.

With the development of 5G systems, in the 3rd generation partnership project (3GPP) standard, there is a need for 5G systems to support that zero-power terminals can access a network. The scenarios that zero-power terminals can access a network mainly targets have the following characteristics: extreme environments that are not suitable for ordinary terminals; using terminals with very low power consumption and cost; and battery-free terminals. The zero-power communication system can be used in IWSN, smart agriculture, smart warehousing and logistics, smart homes and other scenarios. Zero-power terminals can be directly connected to a base station, or can be connected to a base station through a relay device. The former is called direct mode, and the latter is called indirect mode.

Based on the energy source and usage of zero-power terminals, zero-power terminals can be classified into the following types.
1) Passive zero-power terminal: the passive zero-power terminal does not need an internal battery. In the case where the passive zero-power terminal is close to a network device (such as a reader of an RFID system), the passive zero-power terminal is in the near field formed by antenna radiation of the network device. Therefore, an antenna of the passive zero-power terminal can generate induced current through electromagnetic induction, and the induced current drives a low-power chip circuit of the zero-power terminal, to realize demodulation of a signal on a forward link and modulation of a signal on a backward link. For a backscatter link, the passive zero-power terminal performs signal transmission using backscatter.

It may be seen that, the passive zero-power terminal does not require a built-in battery to drive either the forward link or the reverse link, and is a truly zero-power terminal. The passive zero-power terminal does not require a battery, and the RF circuit and baseband circuit are very simple, for example, an LNA, a PA, a crystal oscillator, an analog-to-digital converter (ADC), and other devices are not required, so the passive zero-power terminal has many advantages such as small size, light weight, extremely low price, and long service life. The characteristics of this type of passive zero-power terminal can also be: battery free; energy acquisition from ambient environment (such as radio waves, solar energy, wind energy, mechanical kinetic energy, etc.); universal subscriber identity module (USIM)-free. The passive zero-power terminal can also store a certain amount of energy from ambient environment, but the energy is very less, so supported functional logic is much less than that of ordinary terminals such as mobile phones.

2) Semi-passive zero-power terminal: the semi-passive zero-power terminal itself does not require conventional batteries installed therein, but can use an RF energy harvesting module to harvest radio wave energy and store the harvested energy in an energy storage unit (such as a capacitor(s)). After the energy storage unit obtains energy, the energy can drive a low-power chip circuit of the semi-passive zero-power terminal to realize demodulation of a signal on a forward link and modulation of a signal on a backward link. For a backscatter link, the semi-passive zero-power terminal can perform signal transmission using backscatter.

It can be seen that, the semi-passive zero-power terminal does not need a built-in battery to drive either the forward link or the reverse link. Although the energy stored in the capacitor(s) is used in operation, the energy comes from the radio energy harvested by the energy harvesting module, so the semi-passive zero-power terminal is truly also a zero-power terminal. The semi-passive zero-power terminal inherits many advantages of the passive zero-power terminal, so the semi-passive zero-power terminal has many advantages such as small size, light weight, extremely low price, and long service life.

3) Active zero-power terminal: zero-power terminals used in some scenarios can also be active zero-power terminals, which may have a built-in batter(ies). The batter(ies) is configured to drive a low-power chip circuit of the active zero-power terminal to realize demodulation of a signal on a forward link and modulation of a signal on a reverse link. However, for a backscatter link, the active zero-power terminal can perform signal transmission using backscatter. Therefore, zero power consumption of this type of terminals is mainly reflected in the fact that signal transmission on the reverse link does not require the power of the terminal, but is realized through backscatter. The active zero-power terminal has a built-in batter(ies) to power an RFID chip to increase the reading and writing distance of the tag, thereby improving the reliability of communication. Therefore, the active zero-power terminal can be used in some scenarios with relatively high requirements for communication distance, reading delay, etc.

It may be understood that, the terms "system" and "network" herein are usually used interchangeably throughout this disclosure. The term "and/or" herein only describes an association relationship between associated objects, which means that there can be three relationships. For example, *A* and/or *B* can mean *A* alone, both *A* and *B* exist, and *B* alone. In addition, the character "/" herein generally indicates that the associated objects are in an "or" relationship.

It may be understood that, "indication" referred to in embodiments of the present disclosure may be a direct indication, may be an indirect indication, or may mean that there is an association relationship. For example, *A* indicates *B* may mean that *A* directly indicates *B,* for instance, *B* can be obtained according to *A*; may mean that *A* indirectly indicates *B,* for instance, *A* indicates *C*, and *B* can be obtained according to *C*; or may mean that that there is an association relationship between *A* and *B.*

In the elaboration of embodiments of the present disclosure, the term "correspondence" may mean that there is a direct or indirect correspondence between the two, may mean that there is an association between the two, or may mean a relationship of indicating and indicated or configuring and configured, etc.

To facilitate understanding of the technical solutions of the embodiments of the present disclosure, the relevant technologies of the embodiments of the present disclosure are described below. The following related technologies as optional solutions can be arbitrarily combined with the technical solutions of the embodiments of the present disclosure, and they all belong to the protection scope of the embodiments of the present disclosure.

FIG. 4 is a schematic flow chart of a communication method according to an embodiment of the present disclosure. The method includes at least part of the following contents.

S410, a first device receives a wireless signal.

S420, the first device obtains data reported by a second device by removing an interference signal from the wireless signal according to first information, where the first information is associated with the interference signal.

FIG. 5 is a schematic flow chart of a communication method according to another embodiment of the present disclosure. The method includes at least part of the following contents.

S510, a second device reports data to a first device, where the data is used to be mixed with an interference signal during transmission to obtain a wireless signal.

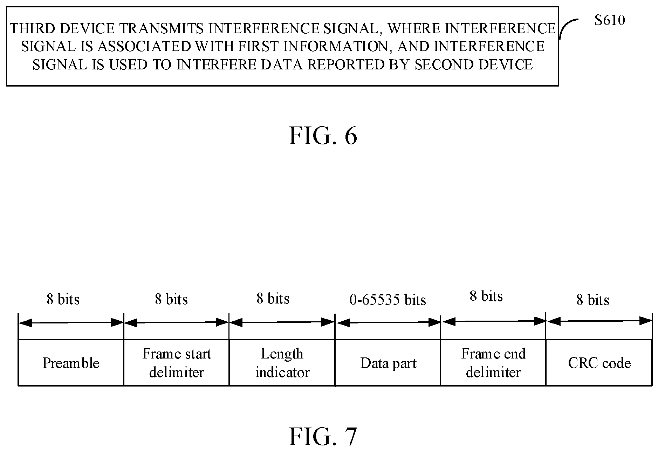

FIG. 6 is a schematic flow chart of a communication method according to another embodiment of the present disclosure. The method includes at least part of the following contents.

S610, a third device transmits an interference signal, where the interference signal is associated with first information, and the interference signal is used to interfere with data reported by a second device.

Here, the second device may be a zero-power terminal.

The first device may be an access network device, or may be an AP, or may be a terminal device. The access network device may be any one of a gNB, an eNB, a base station, etc. Specifically, the first device may be one of the following: a second access network device, a second AP, and a second terminal device.

The third device may any one of an access network device, an AP, and a terminal device. Specifically, the third device may be one of the following: a first access network device, a first AP, and a first terminal device. Exemplarily, in the case where the third device is a first access network device, the first device is a second access network device or a second terminal device. In the case where the third device is a first AP, the first device is a second AP or a second terminal device. In the case where the third device is a first terminal device, the first device is a second access network device or a second AP.

In one example, the first device is a second access network device, and the third device is a first access network device. In this example, the first access network device may be a secondary access network device, and the second access network device may be a primary access network device. Alternatively, the first access network device is a primary access network device, and the second access network device is a secondary access network device.

In another example, the first device is a second AP, and the third device is a first AP. In this example, the first AP may be a secondary AP, and the second AP may be a primary AP. Alternatively, the first AP may be a primary AP, and the second AP may be a secondary AP.

In an example, the first device may be a first terminal device, and the third device may be a first access network device. The first access network device may be a primary access network device.

In another possible example, the first device is a second access network device, and the third device may be a first terminal device. The second access network device may be a primary access network device.

In another example, the first device is a second AP, and the third device is a first terminal device. Specifically, the second AP is a primary AP.

In another example, the first device may be a second terminal device, and the third device may be a first AP. The first AP may be a primary AP.

It may be understood that, the aforementioned first terminal device and second terminal device may be terminal devices with normal functions in the mobile communication network, for example, they may be other types of terminal devices except zero-power terminals.

It may be noted that, the aforementioned illustration of the first device, the second device, and the third device are applicable to the communication method provided by any one of the embodiments corresponding to FIG. 4 to FIG. 6.

In some possible implementations, the interference signal is generated and transmitted by the third device according to the first information, and the third device may also trigger the second device to report data.

For execution of this implementation, the first device and the third device need to pre-negotiate with each other to obtain the same first information, so that the third device can generate and transmit the interference signal according to the first information, and the first device can remove the interference signal from the wireless signal according to the first information, which are specifically as follows.

Before the third device transmits the interference signal, the method may further include the following. The third device transmits the first information to the first device; or the third device receives the first information transmitted by the first device. Correspondingly, before the first device receives the wireless signal, the method may further include the following. The first device transmits the first information to the third device; or the first device receives the first information transmitted by the third device.

The aforementioned first information can be exchanged between the aforementioned first device and the third device through a wired connection or a wireless connection. In one example, the aforementioned first device is a second access network device, and the third device is a first access network device. The aforementioned first information can be transmitted between the first device and the third device through an Xn interface, or a wired connection can be provided between the first device and the third device, and the aforementioned first information can be transmitted between the first device and the third device through a wired connection. In another example, the first device is a second AP, the third device is a first AP, and the aforementioned first information can be transmitted between the first device and the third device through a wireless connection. In another example, the first device is a second AP and the third device is a first terminal device, or the first device is a second terminal device and the third device is a first AP, then the first information can be transmitted between the first device and the third device through a wireless connection. In another example, the first device is a second terminal device and the third device may be a first access network device, or the first device is a second access network device and the third device is a first terminal device, then the aforementioned first information can be transmitted between the first device and the third device through a Uu interface. In the aforementioned examples, there is no limitation on the specific signaling or message carrying the first information, and any signaling that can be transmitted between the first device and the third device in the relevant technology can be used in this embodiment, and therefore no exhaustive enumeration is made.

In some possible implementations, in the case where the first device transmits the first information to the third device, or in the case where the third device transmits the first information to the first device, the first information may be encrypted first information. That is, in order to enhance the security of information transmitted between the first device and the third device, the first information may be encrypted.

Specifically, the first information transmitted between the first device and the third device is protected by a shared key between the first device and the third device before being transmitted, and is decrypted after being received to obtain the first information. In this way, eavesdroppers cannot obtain the first information and the interference signal, and thus cannot obtain the data transmitted by the second device

In one example, the first information may be encrypted by using the wired equivalent privacy (WEP) scheme of rivest cipher 4 (RC4), so as to protect legitimate users of the network from being eavesdropped. Specifically, the WEP algorithm uses an external key management program to distribute a key (i.e., shared key, hereinafter referred to as key) used in the network, and the stations in the network (such as the first device and the third device) use the key to encrypt information to be transmitted, or use the key to decrypt received information. For example, to perform encryption, a plaintext to be transmitted (such as the first information) and an equal-length key sequence may be subject to bitwise XOR operation to obtain a ciphertext (which may be referred to as the encrypted first information). To perform decryption, the ciphertext and the same key sequence may be subject to bitwise XOR operation to obtain the plaintext (such as the first information). The key sequence may be generated by the WEP algorithm. The key sequence may be a pseudo random key sequence.

Taking the key sequence as a pseudo random key sequence as an example, the method of generating the key sequence may include: connecting the key and an initialization vector (IV) to generate a seed; inputting the seed into a pseudo random number generator (PRNG); and outputting, by the PRNG, a pseudo random key sequence of the same length as the data to be transmitted. The IV uses a 24-bit random number, and the key length is 40 bits. Accordingly, performing bitwise XOR operation on the plaintext to be transmitted (such as the aforementioned first information) and a pseudo random key sequence of the same length to obtain the ciphertext may include: performing a calculation on the plaintext to be transmitted using an integrity algorithm to obtain an integrity check value (ICV), where the plaintext to be transmitted and the ICV are taken as the data to be transmitted; and encrypting the data to be transmitted with the pseudo random key sequence (that is, performing an XOR operation) to output the IV and the ciphertext.

The aforementioned ciphertext may be a medium access control protocol data unit (MAC PDU). In addition, the information finally transmitted may also include an ICV. Specifically, to transmit the encrypted first information, a preset second frame format may be used to encapsulate the encrypted first information. Exemplarily, in the preset second frame format, the first four bits of a frame body may contain an IV field. The IV field may include an IV (which may occupy 3 bits) and a key identifier (ID) (which may occupy 2 bits), and bits 0 to 23 of the IV contained in the IV field correspond to bits 0 to 23 of the aforementioned seed. In addition, the preset second frame format may also contain an MPDU field, that is, a ciphertext; and an ICV field may also be contained after the MPDU to carry the aforementioned ICV (which may occupy 4 bits). For transmitting the encrypted first information, since the key ID and the IV are carried in the IV field in the aforementioned preset second frame format, the receiving end that can determine the key based on the key ID can recover the key sequence, while eavesdroppers that cannot determine the key based on the key ID cannot recover the key sequence and thus cannot obtain the first information even if the eavesdroppers receive the IV. It can be seen that, through the processing of this embodiment, the information stability and information security in the process that the first device and the third device negotiates the first information can also be ensured.

In another example, in the case where the first device and the third device are respectively a second UE and a first base station, or the first device and the third device are respectively a second base station and a first UE, the 3GPP access stratum (AS) security technology may be used for encryption. Specifically, a transmitter inputs a shared key *K_{RRCenc}* into an encryption algorithm to generate a keystream block, and performs an XOR operation on the keystream block and the first information to obtain a protected ciphertext; and after receiving the ciphertext, a receiver first inputs the shared key *K_{RRCenc}* into the encryption algorithm to generate a keystream block, and performs an XOR operation on the ciphertext to obtain the first information.

The transmitter is the first device and the receiver is the third device; or the transmitter is the third device and the receiver is the first device. The shared key *K_{RRCenc}* is shared between the first device and the third device. The encryption algorithm may be any one of the following: an advanced encryption standard (AES) algorithm, a snow third generation (SNOW 3G) algorithm, or a Zu Chongzhi (ZUC) algorithm.

In another example, in the case where the first device and the third device are two base stations (i.e., the first access network device and the second access network device in the aforementioned embodiments), internet protocol security (IPSEC) can be used for encryption. Specifically, the transmitter and the receiver first negotiate a shared symmetric key based on a certificate or public-private key pair of the base station; the transmitter encrypts the first information using data encryption standard (DES) based on the shared symmetric key to obtain a ciphertext; and after receiving the ciphertext, the receiver decrypts the ciphertext based on the shared symmetric key and DES to obtain the first information. The transmitter is the first device and the receiver is the third device; or the transmitter is the third device and the receiver is the first device.

In some possible implementations, the first information includes a pseudo random sequence, or the first information includes relevant information for generating the pseudo random sequence.

Optionally, the first information includes the pseudo random sequence.

In a case, the first information may be generated by the first device. That is, the first device may generate the pseudo random sequence using a pseudo random number generator (PRNG). Further, after the first device generates the pseudo random sequence, the first device may transmit the pseudo random sequence to the third device; correspondingly, the third device may receive the pseudo random sequence transmitted by the first device.

In another case, the first information may be generated by the third device. That is, the third device may generate the pseudo random sequence using a PRNG. After the third device generates the pseudo random sequence, the third device may transmit the pseudo random sequence to the first device; correspondingly, the first device receives the pseudo random sequence transmitted by the third device.

Optionally, the first information includes the relevant information for generating the pseudo random sequence. Specifically, the relevant information for generating the pseudo random sequence may refer to a seed for generating the pseudo random sequence.

In a case, the first information is the seed for generating the pseudo random sequence, which is determined or generated by the first device. Then, the first device can transmit the first information to the third device; correspondingly, the third device can receive the first information transmitted by the first device.

In another case, the first information is the seed for generating the pseudo random sequence, which is determined or generated by the third device. Then, the third device can transmit the first information to the first device; correspondingly, the first device can receive the first information transmitted by the third device.

It may be understood that, the aforementioned first information is the pseudo random sequence or the related information for generating the pseudo random sequence, which may be a preferred example. However, in the solution provided in the embodiment, the first information may not be limited to the aforementioned pseudo random sequence or related information for generating the pseudo random sequence. For example, the first information may be a random sequence, such as a random sequence composed of random numbers of a specified length, etc., where the specified length may be set according to actual conditions or configured by the network device, such as 8 bits, 13 bits, 16 bits, or longer or shorter, which is not limited here. As long as the first information is the information shared by the first device and the third device, it is within the protection scope of the embodiment and is not exhaustively listed here.

After completing the above processing, the first device and the third device can share the same first information. Then the third device can transmit a trigger signal to the second device when necessary, and transmit an interference signal to interfere with the data reported by the second device, so that eavesdropping devices cannot correctly parse the data reported by the second device, while the first device can remove the interference signal from the wireless signal according to the first information.

When the third device transmits the interference signal, the method further includes the following: the third device transmits the trigger signal, and the trigger signal is used to activate the second device. That is, the third device transmits the trigger signal when transmitting the interference signal, where the trigger signal is used to activate the second device, specifically, the trigger signal is used to power and activate the second device.

The aforementioned interference signal may have a certain transmission duration, that is, the aforementioned third device may transmit the interference signal as follows: the third device starts to transmit the interference signal at a start transmission time of the interference signal and continues transmitting the interference signal within the transmission duration of the interference signal. This is because the interference signal is used to interfere with the data reported by the second device, so the transmission duration of the interference signal needs to cover at least the time when the second device reports the data. In addition, in order to ensure that the interference signal can interfere with the data reported by the second device, the start transmission time of the interference signal need not be later than a transmission time of the trigger signal (i.e., the time to transmit the trigger signal), so the transmission duration of the interference signal can also cover the transmission time of the trigger signal.

The manner for the third device to determine the start transmission time of the interference signal and the transmission duration of the interference signal is described as follows: the third device may first determine the transmission time of the trigger signal, and then determine a time no later than the transmission time of the trigger signal as the start transmission time of the interference signal.

Optionally, the third device may determine the transmission time of the trigger signal according to first preset configuration. The aforementioned first preset configuration may be pre-configured in the third device, and the first preset configuration may include one or more times (points of time), each of which is a time when the third device needs to transmit the trigger signal. In this case, the third device may calculate a difference between the current time and each time in the first preset configuration. If a difference between the first time and the current time is less than a preset duration threshold, and the first time is later than the current time, the first time is used as the transmission time of the trigger signal.

The third device may determine the first time as the transmission time of the interference signal (i.e., the time to transmit the interference signal), or the third device may determine the time ahead of the first time by a first specified time length as the transmission time of the interference signal. The first specified time length may be preset or preconfigured according to actual conditions, for example, the first specified time length may be 1 second, 30 milliseconds, or longer or shorter, which are not exhaustive here.

For example, assuming that the first preset configuration includes two times, namely 12 o'clock and 6 o'clock, and the third device determines that the current time is 11:55, which is close to 12 o'clock in the first preset configuration and earlier than 12 o'clock, then the terminal device can determine 12 o'clock as the first time, that is, the transmission time of the trigger signal, and also determine 12 o'clock as the start transmission time of the interference signal. Alternatively, 12 o'clock can be determine as the transmission time of the trigger signal, and 11:59:59 can be determined as the start transmission time of the interference signal.

Optionally, the third device may determine to transmit the trigger signal upon reception of third indication information transmitted by the network device, where the third indication information may be used to instruct the third device to acquire data of zero-power terminals within the coverage of the third device. In this case, the third device may start to transmit the trigger signal upon reception of the third indication information, that is, the transmission time of the trigger signal is the time when the third indication information is received; accordingly, the third device may determine that the start transmission time of the interference signal is the transmission time of the trigger signal. The aforementioned network device may refer to a core network device, for example, the network device may include at least one of access and mobility management function (AMF), session management function (SMF), network exposure function (NEF), etc. The network device may also transmit the third indication information to the third device upon reception of an indication indicative of data acquisition transmitted by AF.

It may be understood that, the above is only an exemplary illustration, and all possible manners for the third device to determine the need to transmit the trigger signal, and determine the transmission time of the trigger signal and the start transmission time of the interference signal are not exhaustively listed here, and all the manners are within the protection scope of this embodiment as long as the third device starts to transmit the interference signal at a time no later than the transmission time of the trigger signal.

The transmission duration of the interference signal may also be pre-configured, or specified by the protocol, or preset. For example, the core network device or AF may pre-transmit configuration information to the third device, and the configuration information carries the transmission duration of the interference signal. For example, the transmission duration of the interference signal may be a preset default transmission duration, such as 10 seconds, 1 minute, 2 minutes, or longer or shorter, which is not exhaustive here. For another example, the transmission duration of the interference signal is specified by the protocol. It may be understood that, the aforementioned method for obtaining the transmission duration of the interference signal is only an exemplary illustration. In actual processing, as long as the transmission duration of the interference signal can include the transmission time of the trigger signal and the time when the second device reports data, the transmission duration of the interference signal is within the protection scope of this embodiment and is not exhaustively illustrated.

The third device may transmit the interference signal as follows. The third device obtains second information according to a preset encoding method and the first information; the third device obtains a first signal by modulating the second information according to a preset modulation method; and the third device determines the first signal as the interference signal and transmits the interference signal.

Optionally, the first information may be a pseudo random sequence, and correspondingly, the second information may be an encoded pseudo random sequence. The third device obtains the second information according to the preset encoding method and the first information, which specifically means that the third device obtains the encoded pseudo random sequence by encoding the pseudo random sequence according to the preset encoding method.

Optionally, the first information may be relevant information for generating the pseudo random sequence, and correspondingly, the second information is the encoded pseudo random sequence. The third device obtains the second information according to the preset encoding method and the first information, which specifically means that the third device generates the pseudo random sequence according to the relevant information for generating the pseudo random sequence, and obtains the encoded pseudo random sequence by encoding the pseudo random sequence according to the preset encoding method.

It may be understood that, the aforementioned first information may also be other types of information such as a random sequence. If the first information is other types of information, the third device obtains the second information according to the preset encoding method and the first information, which specifically means that the third device obtains the second information by encoding the first information according to the preset encoding method, and the second information is encoded first information. This is only an exemplary illustration, and all possible types of the first information are not exhaustively illustrated.

The preset encoding method includes one of the following: Manchester encoding, non-return-to-zero inverted encoding, unipolar return-to-zero encoding, differential bi-phase encoding, Miller encoding, and bi-phase space encoding. In a preferred example, in the embodiment, Manchester encoding is determined as the preset encoding method.

The preset modulation method includes one of the following: Gauss frequency shift keying (GFSK), amplitude shift keying (ASK), frequency shift keying (FSK), phase shift keying (PSK), on-off keying (OOK). In a preferred example, in the embodiment, GFSK can be determined as the preset modulation method.

It may be pointed out that, the aforementioned preset encoding method and preset modulation method are only exemplary illustrations, and other modulation methods and/or other coding methods may be used in actual processing, which are not exhaustively illustrated.

Furthermore, after the third device transmits the trigger signal, the second device may perform the following. Before the second device reports data to the first device, the method further includes the following. The second device receives the trigger signal transmitted by the third device, where the trigger signal is used to activate the second device. That is, when the second device receives the trigger signal transmitted by the third device, the second device reports data to the first device.

Specifically, the second device may report data to the first device as follows. The second device obtains encoded data by encoding the data according to a preset encoding method; the second device obtains a second signal by modulating the encoded data according to a preset modulation method; and the second device transmits the second signal to the first device.

It may be pointed out that, the data reported by the second device is data collected by the second device. The second device may collect data before receiving the trigger signal transmitted by the third device, or may collect data upon reception of the trigger signal transmitted by the third device. In the embodiment, the time for the second device to collect data is not limited.

The preset encoding method is the same as that in the above embodiment. It may be noted that, the preset encoding method used by the second device needs to be the same as the preset encoding method used by the third device. The specific preset encoding method used by the second device may be pre-configured for the second device and the specific preset encoding method used by the third device may be pre-configured for the third device, or the preset encoding method used by the second device and the preset encoding method used by the third device can also be obtained through other manners such as negotiation, which are not exhaustively listed here. In a preferred example, the preset encoding method used by the second device and the preset encoding method used by the third device may be both Manchester encoding.

The second device may obtain the second signal by modulating the encoded data according to the preset modulation method as follows. The second device generates a first data frame according to the encoded data; and the second device obtains the second signal by modulating the first data frame according to the preset modulation method.

The second device may generate the first data frame according to the encoded data as follows. The second device generates the first data frame according to the encoded data and a preset first frame format. The preset first frame format may be pre-configured in the second device, and the frame format is within the protection scope of the embodiment as long as the second device and the first device are pre-configured with the same frame format. A field(s) that may be contained in the preset first frame format will be described in detail below in conjunction with the illustration of the first data frame.

The first data frame contains a first field, and the first field carries the encoded data. That is, the first field is used to carry the data reported by the second device, and specifically the first field carries the encoded data. In an example, the content carried by the first field may be called a data part. The length of the first field is variable and can be determined according to actual conditions (that is, determined according to the length of the encoded data actually to be carried), for example, may be within a range from 0 bit to 65535 bits, and all possible lengths are not exhaustively listed here.

Optionally, the first data frame may contain only the first field.

Optionally, in addition to the aforementioned first field, the first data frame may also contain at least one of the following: a second field, where the second field carries a preamble for transceiving synchronization; a third field, where the third field carries second indication information, and the second indication information indicates the length of the first field; and a fourth field, where the fourth field carries a check code.

The length of the second field may be fixed, such as 8 bits, or may be longer or shorter, where possible lengths of the second field are not exhaustively listed here. The preamble for transceiving synchronization carried by the second field can be set according to actual conditions. The role of the preamble for transceiving synchronization is to ensure that the receiving end of information (i.e., the first device) and the transmitting end of information (i.e., the second device) can be completely synchronized. The synchronization may specifically refer to synchronization of communication frequency. The preamble for transceiving synchronization can be designed according to actual conditions. For example, the preamble for transceiving synchronization may be "00001111". This design is because for Manchester encoding, there are not four 0 or four 1 at the same time, so the preamble for transceiving synchronization can be distinguished from the content carried by the data part (i.e., the first field). Of course, the preamble for transceiving synchronization can also be designed in other forms, which are not exhaustively listed here.

The second indication information carried by the third field indicates the length of the first field. The second indication information may be referred to as a length indicator. The length of the third field may be fixed, such as 8 bits or 16 bits, which is only an exemplary illustration and is not intended to limit the length of the third field.

The fourth field is used to carry the check code. The check code is used to check the consistency of received data and original data. Specifically, the check code refers to a cyclic redundancy check (CRC) code. The length of the fourth field may be 8 bits.

Exemplarily, the first data frame may contain both the first field and the second field. In this example, the first data frame only needs to carry the preamble for transceiving synchronization through the second field to enable that the second device and the first device can achieve communication synchronization, and carry the encoded data through the first field to enable that the first device can obtain, through parsing, the data reported by the second device.

Exemplarily, the first data frame may contain the first field, the second field, and the third field. In this example, on the basis of achieving communication synchronization between the first device and the second device, the length of the first field indicated by the third field may be further used to enable the first device to determine the length of the encoded data carried by the first field, so that the first device can more accurately extract the encoded data to obtain, through parsing, the data reported by the second device.

Exemplarily, the first data frame may contain the aforementioned first field, second field, third field and fourth field. In this example, the first device is allowed to further verify the encoded data in conjunction with the CRC code, further ensuring the accuracy of the final data.

Optionally, the first data frame may contain more fields in addition to the aforementioned first field and at least one of the second field, the third field, and the fourth field. For example, the first data frame may further contain at least one of the following: a fifth field, where the fifth field carries a frame start delimiter; and a sixth field, where the sixth field carries a frame end delimiter.

The length of the fifth field may be fixed, such as 8 bits, and the frame start delimiter carried by the fifth field may be a first specified sequence, such as "01111110". The length of the sixth field may be fixed, such as 8 bits, and the frame end delimiter carried by the sixth field may be a second specified sequence, for example, the second specified sequence may be the same as the first specified sequence, that is, may be "01111110". For example, the second specified sequence may be different from the first specified sequence, for example, the second specified sequence may be "10000001". It may be understood that, this is only an exemplary illustration, and there is no limitation on the second specified sequence.

In conjunction with FIG. 7, a possible exemplary explanation of the aforementioned first data frame is provided. The preamble carried by the aforementioned second field may be located at the beginning of the first data frame, and may have a length of 8 bits. The fifth field may be located after the first field, carries the frame start delimiter, and may have a length of 8 bits. The third field is located after the fifth field, carries the length indicator, and may have a length of 8 bits. The first field is located after the third field, carries the data part, i.e., the encoded data, and may have a length ranging from 0 bit to 65535 bits. The sixth field is located after the first field, carries the frame end delimiter, and may have a length of 8 bits. The fourth field is located after the sixth field, i.e., the fourth field is located at the last position of the first data frame, and the fourth field carries the CRC code, and may have a length of 8 bits.

The aforementioned preset modulation method is the same as that in the aforementioned embodiment. It may also be noted that, the second device and the third device need to use the same modulation method. The specific preset modulation method used by the second device may be pre-configured for the second device and the specific preset modulation method used by the third device may be pre-configured for the third device, or the specific preset modulation method used by the second device and the specific preset modulation method used by the third device may be obtained through other ways such as negotiation, which are not exhaustively listed here. In a preferred example, the preset modulation method used by the second device and the preset modulation method used by the third device may both be GFSK.

Based on the illustration of the foregoing embodiments, it can be seen that, the second device may report data to the first device as follows. The second device encodes and modulates the data and then transmits the second signal to the first device. The foregoing embodiments have already described that the third device also transmits the interference signal when transmitting the trigger signal, and the interference signal has a certain transmission duration, so the second signal transmitted by the second device may be mixed with the interference signal during air transmission. Correspondingly, the wireless signal received by the first device is a mixture of the second signal and the interference signal, so the first device needs to remove, according to the first information, the interference signal from the wireless signal received by the first device. The processing performed by the first device is described below.

The first device may obtain data reported by the second device by removing the interference signal from the wireless signal according to the first information as follows. The first device obtains the second signal by removing the interference signal from the wireless signal according to the first signal, where the first signal is generated according to the first information; and the first device obtains the data reported by the second device by processing the second signal.

The manner in which the first device generates the first signal may be as follows. The first device obtains second information according to a preset encoding method and the first information; and the first device obtains the first signal by modulating the second information according to a preset modulation method.

Optionally, the first information may be a pseudo random sequence, and correspondingly, the second information may be an encoded pseudo random sequence. The first device obtains the second information according to the preset encoding method and the first information, which specifically means that the first device obtains the encoded pseudo random sequence by encoding the pseudo random sequence according to the preset encoding method. The first device obtains the first signal by modulating the second information according to the preset modulation method, which may mean that the first device obtains the first signal by modulating the encoded pseudo random sequence according to the preset modulation method.

Optionally, the first information may be relevant information for generating the pseudo random sequence, and correspondingly, the second information is the encoded pseudo random sequence. The first device obtains the second information according to the preset encoding method and the first information, which specifically means that the first device generates the pseudo random sequence according to the relevant information for generating the pseudo random sequence, and obtains the encoded pseudo random sequence by encoding the pseudo random sequence according to the preset encoding method. The first device obtains the first signal by modulating the second information according to the preset modulation method, which may mean that the first device obtains the first signal by modulating the encoded pseudo random sequence according to the preset modulation method.

It may be understood that, the aforementioned first information may also be other types of information such as a random sequence. In the case where the first information is other types of information, the first device obtains the second information according to the preset encoding method and the first information, which specifically means that the first device obtains the second information by encoding the first information according to the preset encoding method, where the second information is the encoded first information. This is only an exemplary illustration, and all possible types of the first information are not exhaustively illustrated here.

Since the first information is the same information pre-negotiated by the first device and the third device, the first device can generate the same first signal according to the first information as the third device, with the difference being that the first device does not transmit the first signal after generating the first signal, while the third device transmits the first signal as an interference signal.

In addition, the preset encoding method used by the first device and the preset encoding method used by the third device are the same coding method, and the preset modulation method used by the first device and the preset modulation method used by the third device are also the same modulation method. The detailed illustration of the preset encoding method and the preset modulation method are the same as that of the above embodiments, which will not be repeated here.

The first device may obtain the second signal by removing the interference signal from the wireless signal according to the first signal as follows. The first device obtains the second signal by subtracting the first signal from the wireless signal to remove the interference signal in the wireless signal. The first device may subtract the first signal from the wireless signal as follows. The first device performs subtraction on a waveform of the first signal and a waveform of the wireless signal.

The first device may obtain the data reported by the second device by processing the second signal as follows. The first device obtains the encoded data by demodulating the second signal according to a demodulation method corresponding to the preset modulation method; and the first device obtains the data reported by the second device by decoding the encoded data according to a decoding method corresponding to the preset encoding method.

The first device obtains the encoded data by demodulating the second signal according to the demodulation method corresponding to the preset modulation method as follows. The first device obtains a first data frame by demodulating the second signal according to the demodulation method corresponding to the preset modulation method, and obtains the encoded data from the first data frame.

That is, the first device obtains the first data frame by demodulating the second signal, and then according to the definition of a preset first frame format, the first device can determine the position of each field of the first data frame, the length of each field, and the content carried by each field, and then according to the length of each field of the first data frame and the content carried by each field, the first device can determine the position and length of the first field in the first data frame, extract the data part (that is, the encoded data) carried by the first field for decoding, and then obtain the data reported by the second device.

The definition of each field contained in the first data frame is the same as that in the above embodiment, and thus will not be repeated herein.

Here, the preset modulation method and the preset encoding method are the same as those in the above-mentioned embodiment, which will not be repeated here. The demodulation method corresponding to the preset modulation method may be a demodulation method opposite to or corresponding to the preset modulation method. For example, in a preferred example, the preset modulation method is the GFSK modulation method, and the demodulation method corresponding to the preset modulation method is the GFSK demodulation method. The decoding method corresponding to the preset encoding method may be a decoding method opposite to or corresponding to the preset encoding method. For example, in a preferred example, the preset encoding method is Manchester encoding, and the decoding method corresponding to the preset encoding method is Manchester decoding.

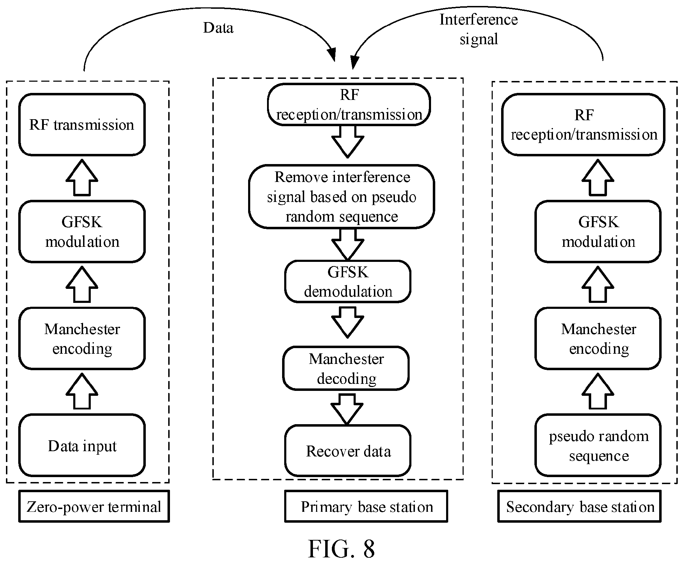

In conjunction with FIG. 8, the processing of the aforementioned embodiment is exemplarily described by taking the first device as a primary base station, the second device as a zero-power terminal, the third device as a secondary base station, the preset encoding method as Manchester encoding, and the preset modulation method as GFSK modulation as an example.

In the example of FIG. 8, a pseudo random sequence is used as first information that is determined to be used by both the primary base station and the secondary base station through negotiation. The pseudo random sequence is a determined sequence with certain randomness. The pseudo random sequence has the following advantages: on the one hand, the pseudo random sequence can be predetermined, and can be repeatedly generated and copied; on the other hand, the pseudo random sequence has certain randomness (i.e., statistical characteristics) of a random sequence. That is, the pseudo random sequence can be a determined sequence generated by a shift register, but the pseudo random sequence has certain randomness. Specifically, although the pseudo random sequence can be predetermined, due to its randomness, it is impossible to judge whether a generated sequence is a true random sequence or a pseudo random sequence, and whether a generated sequence is a true random sequence or a pseudo random sequence can only be judged according to the method of generating the sequence. It can be seen from the above analysis that, the pseudo random sequence has good randomness and a correlation function close to white noise, and has predetermined determinability and repeatability. Since the pseudo random sequence has the characteristics of good autocorrelation, easily being generated and copied, pseudo randomness, etc., a pseudo random sequence is used as the first information in a preferred example of the embodiment.

As can be seen from FIG. 8, the secondary base station generates an interference signal (or artificial noise) by using a pseudo random sequence (i.e., the first information). The interference signal can interfere with data transmitted by the zero-power terminal to achieve an effect similar to encryption, and the data mixed with the interference signal can be regarded as an encrypted signal. By doing so, in addition to carrying data, the encrypted signal can have the characteristics of pseudo-noise, so as to achieve the purpose of hiding real data during signal transmission. At the signal receiving end, that is, at the primary base station as illustrated in FIG. 8, the pseudo random sequence can be further used to remove the interference signal, which can be regarded as decrypting (or parsing) the wireless signal, and finally the primary base station can recover the data (i.e., the data reported by the zero-power terminal).

In FIG. 8, the preset encoding method is Manchester encoding. This is because for coding technology, non-return-to-zero inverted encoding and Manchester encoding are two most commonly used encoding methods in the backscatter system. Using simple encoding and modulation can also greatly reduce the power consumption of computation of zero-power communication, so in this example, the zero-power terminal can encode the data to be reported using Manchester encoding, and the primary base station can recover the data using Manchester decoding. The aforementioned Manchester encoding and decoding can encode the data to be transmitted and thus can play an encryption role. The data subject to Manchester encoding only contains a bitstream of 0 1. Furthermore, for Manchester encoding, no matter whether it is differential or non-differential, each code element has a process of jumping from one level to another (such as a rising edge represents 1, a falling edge represents 0; or differential: the direction of an edge remaining unchanged represents 0, and the direction of an edge changes represents 1), so in any data transmission process, by determining an interval between a rising/falling edge and a next rising/falling edge, the time between two code elements can be obtained, thereby also obtaining the frequency used for communication. Therefore, the use of this encoding method can also achieve self-synchronization.

In FIG. 8, the preset modulation method is a simple modulation such as GFSK. This is because the zero-power terminal needs to meet low-power calculations, so the modulation and demodulation methods need to be simple. Therefore, in this example, GFSK modulation is used for exemplary explanation. GFSK is to limit a spectrum width of a signal through a Gaussian low-pass filter before modulation. GFSK modulation is a digital modulation method that pre-modulates and filters input data through a Gaussian low-pass filter and then performs FSK modulation. In addition to maintaining a constant amplitude, GFSK modulation can control the spectrum of a modulated signal by changing the bandwidth of 3dB of the Gaussian low-pass filter, and has the desired characteristics of wireless communication systems such as constant amplitude envelope, concentrated power spectrum, and narrow spectrum.

Although not illustrated in FIG. 8, the primary base station and the secondary base station may first negotiate shared information (i.e., negotiate first information), and the primary base station and the secondary base station may communicate normally with each other. The secondary base station may inform the primary base station of the pseudo random sequence (or related information for generating the pseudo random sequence) (or vice versa), so that the primary base station can later filter out artificial noise scrambled by the pseudo random sequence according to the pseudo random sequence.

In conjunction with FIG. 8, the secondary base station can perform Manchester encoding on the pseudo random sequence, perform GFSK modulation on the encoded pseudo random sequence, and transmit the modulated waveform as an interference signal (that is, artificial noise) through an RF transmission/reception function. It may be understood that, FIG. 8 only illustrates how the secondary base station generates an interference signal. In the aforementioned implementation, the secondary base station can also generate and transmit a trigger signal, and the detailed illustration of this part is the same as that of the aforementioned embodiment, and thus will not be repeated.

After receiving the trigger signal, the zero-power terminal can perform data reporting. In conjunction with FIG. 8, the zero-power terminal can first input data, and the input data can refer to data collected by the zero-power terminal; then the zero-power terminal can obtain encoded data by encoding the data using Manchester encoding; then the zero-power terminal can obtain a second signal by modulating the encoded data using GFSK modulation, and transmit the second signal through an RF transmission function. It may be pointed out that, the second signal transmitted by the zero-power terminal is obtained by encoding and modulating the data. In FIG. 8, for the sake of simplicity, data is still used for illustration.

Further illustration is given in conjunction with FIG. 8. The primary base station will receive a wireless signal, and the primary base station can obtain a second signal by removing the interference signal from the wireless signal according to the pseudo random sequence, and then perform data recovering by performing GFSK demodulation and Manchester decoding on the second signal, where performing data recovering refers to recover the data reported by the zero-power terminal.

Encoding, modulation, decoding, demodulation and other processing of the primary base station, secondary base station, and zero-power terminal in FIG. 8 are the same as those described in the forgoing embodiments, and thus are not repeated here.

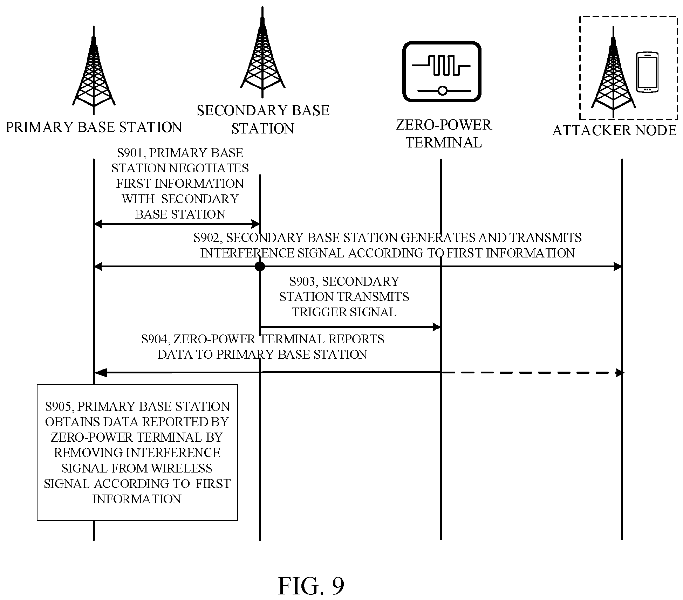

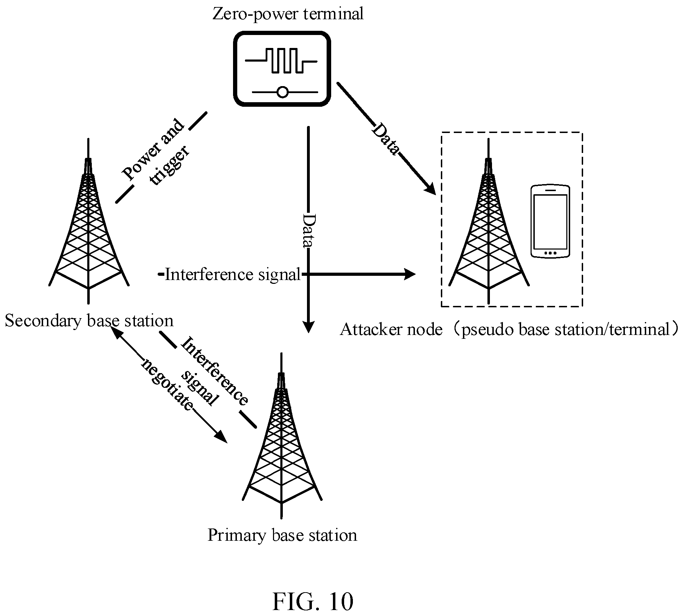

Taking the first device as a primary base station, the second device as a zero-power terminal, and the third device as a secondary base station as an example, in combination with FIG. 9 and FIG. 10, a possible exemplary illustration of the communication methods provided in FIG. 4 to FIG. 6 is made, which specifically includes the following.

S901, the primary base station negotiates first information with the secondary base station. That is, the primary base station and the secondary base station as illustrated in FIG. 10 perform negotiation. In this step, the primary base station can transmit the first information to the secondary base station, or the secondary base station can transmit the first information to the primary base station. The specific illustration of the first information is the same as that in the forgoing embodiments, and is not repeated here.

S902, the secondary base station generates and transmits an interference signal according to the first information, that is, transmits the interference signal as illustrated in FIG. 10, where the interference signal can interfere with both an attacker node and the primary base station. In an example, the interference signal may also be called artificial noise.

S903, the secondary base station transmits a trigger signal. The trigger signal is used to power and activate the zero-power terminal. That is, the secondary base station as illustrated in FIG. 10 powers and triggers the zero-power terminal.

Here, the execution order of S902 and S903 may be that S902 and S903 are executed simultaneously, or that S902 is executed before S903.

S904, the zero-power terminal reports data to the primary base station. Specifically, the zero-power terminal may encode and modulate the data into a second signal, and transmit the second signal to the primary base station.

S905, the primary base station receives the wireless signal, and obtains the data reported by the zero-power terminal by removing the interference signal from the wireless signal according to the first information. Here, the wireless signal received by the primary base station is a mixture of the data reported by the zero-power terminal and the interference signal. That is, the wireless signal is a mixture of the second signal and the interference signal.

In combination with FIG. 9 and FIG. 10, it can also be seen that, in addition to the primary base station, the secondary base station, and the zero-power terminal, there may also be an attacker node, that is, an eavesdropper' eavesdropping device, such as a pseudo base station or terminal as illustrated in FIG. 10. The attacker node may eavesdrop on the data reported by the zero-power terminal. In combination with FIG. 9, when executing S902, the secondary base station may transmit the interference signal indiscriminately, that is, the attacker node can also receive the interference signal transmitted by the secondary base station. When executing S904, when the zero-power terminal reports data to the primary base station, the attacker node may also eavesdrop on the wireless signal which is a mixture of the interference signal and the data. For example, as illustrated in FIG. 10, the zero-power terminal can report data, and the data may be received by both the primary base station and the attacker node. Since the primary base station and the secondary base station share the first information, and the first information can have the functions of encryption and decryption, so the primary base station can remove the interference signal transmitted by the secondary base station. Even if the attacker node can also receive the wireless signal which is a mixture of the interference signal and data, the attacker node cannot remove the interference signal in the wireless signal because the attacker node does not have the first information, and ultimately the attacker node cannot parse or recover the data reported by the zero-power terminal. It can be seen that, the above implementation method can ensure the security of the data reported by the zero-power terminal.

It may be understood that, before executing S902~S905, it is necessary to ensure that the primary base station and the secondary base station have completed the processing of S901 once, that is, the primary base station and the secondary base station have negotiated and obtained the first information at least once. In one example, before each execution of S902~S905, S901 is executed once, that is, the primary base station and the secondary base station use the currently negotiated first information each time, which can reduce the possibility of the first information being parsed by eavesdroppers, and further ensure the security of the data reported by the zero-power terminal. In another example, after completing S901 once, S902~S905 are executed multiple times, that is, after the primary base station and the secondary base station complete the negotiation for the first information once, in subsequent multiple triggers of the zero-power terminal reporting data, the primary base station and the secondary base station both use the same first information to generate and remove an interference signal. This example can reduce the occupation of communication resources between the primary base station and the secondary base station.

In FIG. 9 and FIG. 10, the primary base station can also be replaced by a primary AP, and the secondary base station can also be replaced by a secondary AP or a terminal device. The case where the primary base station is replaced by the primary AP and the secondary base station is replaced by the secondary AP or the terminal device is more suitable for the WIFI technology scenario, which may specifically include the following. The primary AP negotiates the first information with the secondary AP (or the terminal device); the secondary AP (or the terminal device) generates and transmits an interference signal according to the first information; the secondary AP (or the terminal device) transmits a trigger signal; the zero-power terminal reports data to the primary AP; and the primary AP obtains the data reported by the zero-power terminal by removing the interference signal from the wireless signal according to the first information. Here, the attacker node may also eavesdrop on the wireless signal which is a mixture of the data and the interference signal, but because the attacker node does not have the first information, the attacker node cannot remove the interference signal in the wireless signal, and finally the attacker node cannot obtain, through parsing, the data reported by the zero-power terminal. In the WIFI technology scenario, the processing that the primary AP, the secondary AP (or the terminal device), and the zero-power terminal can perform is the same as the illustration of the above-mentioned embodiments, and thus will not be repeated here.

It may also be understood that, the first device and the third device can also be replaced by other devices and are applicable to the examples provided in FIG. 9 and FIG. 10. For other various possible devices and combinations of the first device and the third device, the illustration is the same as that in the aforementioned embodiments and therefore will not be repeated here.

In some possible implementations, the interference signal is generated and transmitted by the third device according to the first information, and the first device triggers the second device to report data.

For execution of the solution provided in the embodiment, the first device and the third device need to obtain the same first information through pre-negotiation, so that the third device can generate and transmit the interference signal according to the first information, and the first device can remove the interference signal from the wireless signal according to the first information, which are specifically as follows.

Before the third device transmits the interference signal, the method may further include the following. The third device transmits the first information to the first device, or the third device receives the first information transmitted by the first device. Correspondingly, before the first device receives the wireless signal, the method may further include the following. The first device transmits the first information to the third device, or the first device receives the first information transmitted by the third device.

The illustration of the first information is the same as that in the aforementioned embodiment, and thus will not be repeated.

The difference between this embodiment and the above embodiment is that in this embodiment, the first device transmits the trigger signal. Specifically, before the first device receives the wireless signal, the method further includes the following. The first device transmits the trigger signal, where the trigger signal is used to activate the second device. Specifically, the trigger signal is used to power and activate the second device.

Before the first device transmits the trigger signal, the method further includes the following. The first device transmits first indication information to the third device, where the first indication information is used to instruct the third device to transmit the interference signal. Accordingly, the third device transmits the interference signal as follows. The third device transmits the interference signal upon reception of the first indication information, where the first indication information is used to instruct the third device to transmit the interference signal.

In the embodiment, the third device may transmit the interference signal as follows. The third device may start to transmit the interference signal at a start transmission time of the interference signal and continue to transmit the interference signal within a transmission duration of the interference signal. The start transmission time of the interference signal may be the time when the third device receives the first indication information, that is, the third device starts to transmit the interference signal as soon as the third device receives the first indication information. The transmission duration of the interference signal may also be pre-configured, or specified by the protocol, or preset. For example, the core network device or AF may transmit configuration information to the third device in advance, where the configuration information carries the transmission duration of the interference signal. For example, the transmission duration of the interference signal may be a preset default transmission duration, such as 10 seconds, 1 minute, 2 minutes, or longer or shorter, which is not exhaustive here. For another example, the transmission duration of the interference signal is specified by the protocol. It may be understood that, the acquisition method of the transmission duration of the interference signal is only an exemplary illustration. In actual processing, as long as the transmission duration of the interference signal can include the transmission time of the trigger signal and the time when the second device reports data, the transmission duration of the interference signal is within the protection scope of the embodiment, which is not exhaustively illustrated.

It can be seen that, the time when the third device starts to transmit the interference signal is affected by the time when the first device transmits the trigger signal. That is, the first device can first determine the transmission time of the trigger signal, and then transmit the first indication information to the third device at a time no later than the transmission time of the trigger signal. This is because the aforementioned interference signal can have a certain transmission duration, and the interference signal is used to interfere with the data reported by the second device, the transmission duration of the interference signal need to at least cover the time when the second device reports the data. Further, in order to ensure that the interference signal can interfere with the data reported by the second device, the start transmission time of the interference signal needs not be later than the transmission time of the trigger signal. Therefore, the transmission duration of the interference signal can also cover the transmission time of the trigger signal.

Optionally, the first device may determine the transmission time of the trigger signal according to a second preset configuration. The second preset configuration may be pre-configured in the first device, and the second preset configuration may include one or more times, each of which is a time when the first device needs to transmit a trigger signal. In this case, the first device may calculate a difference between the current time and each time in the second preset configuration, and if a difference between a second time and the current time is less than a preset duration threshold, and the second time is later than the current time, the second time may be determined as the transmission time of the trigger signal.

Further, the first device may transmit the first indication information to the third device at the second time, so that the third device starts to transmit the interference signal at the same time. Alternatively, the first device may transmit the first indication information to the third device at the time ahead of the second time by a second specified time, so that the third device starts to transmit the interference signal, and the start transmission time of the interference signal is earlier than the transmission time of the trigger signal. The second specified time may be preset or pre-configured according to actual conditions. For example, the second specified time may be 1 second, 10 milliseconds, 20 milliseconds, or longer or shorter, which is not exhaustive here.

Optionally, the first device may determine to transmit the trigger signal upon reception of fourth indication information transmitted by the network device, where the fourth indication information may be used to instruct the first device to acquire data of zero-power terminals within a coverage area of the first device. In this case, the first device may start to transmit the trigger signal upon reception of the fourth indication information, that is, the trigger signal is transmitted at the time when the fourth indication information is received; accordingly, the first device may transmit the first indication information to the third device at the time when the fourth indication information is received, so that the third device starts to transmit the interference signal. The network device may also transmit the fourth indication information to the first device upon reception of an indication for data acquisition from an AF. The aforementioned network device may refer to a core network device, and the exemplary illustration of the core network device is the same as that in the aforementioned embodiment, and thus will not be repeated here.

The third device may transmit the interference signal as follows. The third device obtains the second information according to a preset encoding method and the first information; the third device obtains a first signal by modulating the second information according to a preset modulation method; and the third device takes the first signal as the interference signal and transmits the interference signal. The specific processing manner for the third device to transmit the interference signal is the same as that in the above-mentioned embodiments, and thus will not be repeated here.

The preset encoding method includes one of the following: Manchester encoding, non-return-to-zero inverted encoding, unipolar return-to-zero encoding, differential bi-phase encoding, Miller encoding, and bi-phase space encoding. In a preferred example, in the embodiment, Manchester encoding may be used as the preset encoding method. The preset modulation method includes one of the following: GFSK, ASK, FSK, PSK, and OOK. In a preferred example, in the embodiment, GFSK may be used as the preset modulation method.

Furthermore, after the first device transmits the trigger signal, the second device may perform the following processing. Before the second device reports data to the first device, the method further includes the following. The second device receives the trigger signal transmitted by the first device, where the trigger signal is used to activate the second device. That is, in the case where the second device receives the trigger signal transmitted by the first device, the second device reports data to the first device.

Specifically, the second device may report data to the first device as follows. The second device obtains encoded data by encoding the data according to the preset encoding method; the second device obtains a second signal by modulating the encoded data according to the preset modulation method; and the second device transmits the second signal to the first device. The data reported by the second device is data collected by the second device. The second device may collect data before receiving the trigger signal transmitted by the third device, or may collect data upon reception of the trigger signal transmitted by the third device. The time when the second device collects data is not limited in the embodiment.

The second device may obtain the second signal by modulating the encoded data according to the preset modulation method as follows. The second device generates a first data frame according to the encoded data; and the second device obtains the second signal by modulating the first data frame according to the preset modulation method. The second device may generate the first data frame according to the encoded data as follows. The second device generates the first data frame according to the encoded data and a preset first frame format.

The preset encoding method, preset modulation method, detailed illustration of the first data frame, and detailed illustration of that the second device generates the second signal, etc., are the same as those in the aforementioned implementation, and therefore will not be repeated.

Based on the illustration of the foregoing embodiments, it can be seen that, the second device may report data to the first device as follows. The second device encodes and modulates the data and then transmits the second signal to the first device. As the foregoing embodiments have already described that the third device also transmits the interference signal, so the second signal transmitted by the second device will be mixed with the interference signal during air transmission. Correspondingly, the wireless signal received by the first device is a wireless signal which is a mixture of the second signal and the interference signal, so the first device needs to generate the first signal according to the first information, and then remove the interference signal from the received wireless signal according to the first signal. The processing of the first device is described below.

The first device may obtain the data reported by the second device by removing the interference signal from the wireless signal according to the first information as follows. The first device obtains the second signal by removing the interference signal from the wireless signal according to the first signal, where the first signal is generated according to the first information. The first device obtains the data reported by the second device by processing the second signal. The manner in which the first device generates the first signal may include the following. The first device obtains the second information according to the preset encoding method and the first information; and the first device obtains the first signal by modulating the second information according to the preset modulation method.

The first device may obtain the second signal by removing the interference signal from the wireless signal as follows. Specifically, the first device obtains the second signal by subtracting the first signal from the wireless signal to remove the interference signal in the wireless signal.

The first device may obtain the data reported by the second device by processing the second signal as follows. The first device obtains the encoded data by demodulating the second signal according to a demodulation method corresponding to the preset modulation method; and the first device obtains the data reported by the second device by decoding the encoded data according to a decoding method corresponding to the preset encoding method. The first device may obtain the encoded data by demodulating the second signal according to the demodulation method corresponding to the preset modulation method as follows. The first device obtains the first data frame by demodulating the second signal according to the demodulation method corresponding to the preset modulation method, and obtains the encoded data from the first data frame.

The specific processing of that the first device performs demodulation, decoding, generates the first signal, obtains the data reported by the second device, etc., is the same as that in the above-mentioned embodiments, and thus will not be described in detail.

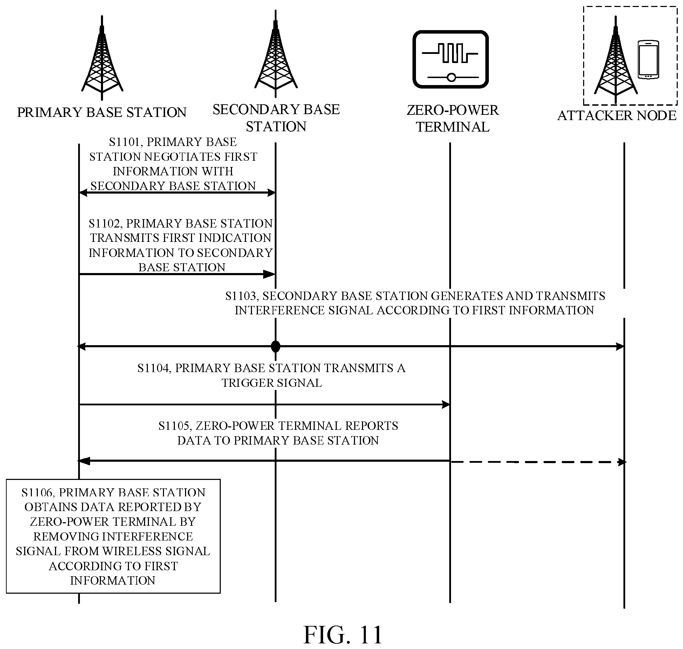

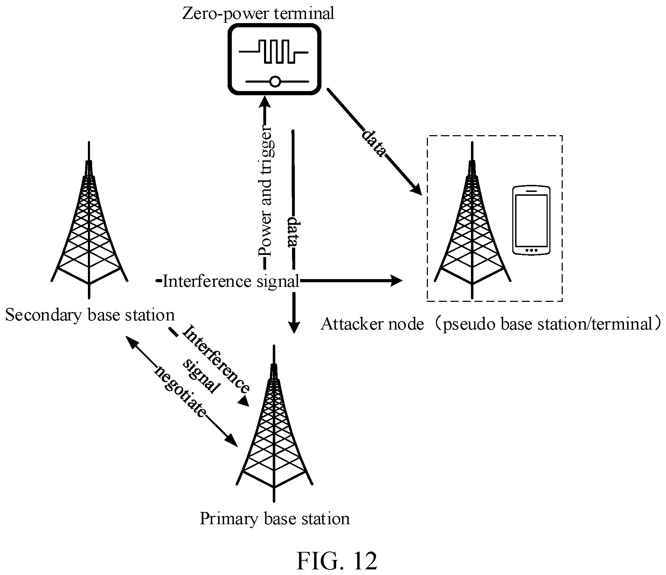

Taking the first device as a primary base station, the second device as a zero-power terminal, and the third device as a secondary base station as an example, in combination with FIG. 11 and FIG. 12, another possible exemplary illustration of the communication methods provided in FIG. 4 to FIG. 6 is made, which specifically includes the following.

S1101, the primary base station negotiates first information with the secondary base station. That is, the primary base station and the secondary base station as illustrated in FIG. 12 perform negotiation. This step may be that the primary base station transmits the first information to the secondary base station, or the secondary base station transmits the first information to the primary base station. The specific illustration of the first information is the same as that in the forgoing embodiments, and thus is not repeated here.

S1102, the primary base station transmits first indication information to the secondary base station, where the first indication information is used to instruct the secondary base station to transmit an interference signal.

S1103, the secondary base station generates and transmits an interference signal according to the first information, that is, the interference signal is transmitted as illustrated in FIG. 12, where the interference signal can interfere with both an attacker node and the primary base station. In an example, the interference signal may also be called artificial noise.

S1104, the primary base station transmits a trigger signal. The trigger signal is used to power and activate the zero-power terminal. That is, the primary base station as illustrated in FIG. 12 powers and triggers the zero-power terminal.

S1103 and S1104 may be executed simultaneously, or S1103 may be executed earlier than S1104.

S1105, the zero-power terminal reports data to the primary base station. Specifically, the zero-power terminal may encode and modulate the data into a second signal, and transmit the second signal to the primary base station.

S1106, the primary base station receives a wireless signal, and obtains data reported by the zero-power terminal by removing the interference signal from the wireless signal according to the first information. Here, the wireless signal received by the primary base station is a wireless signal which is a mixture of the data reported by the zero-power terminal and the interference signal, that is, the wireless signal is a mixture of the second signal and the interference signal.

In combination with FIG. 11 and FIG. 12, it can also be seen that, in addition to the primary base station, the secondary base station, and the zero-power terminal, there may also be an attacker node, that is, an eavesdropper' eavesdropping device, such as a pseudo base station or terminal as illustrated in FIG. 12. The attacker node may eavesdrop on the data reported by the zero-power terminal. In combination with FIG. 11, when executing S1103, the secondary base station may transmit the interference signal indiscriminately, that is, the attacker node can also receive the interference signal transmitted by the secondary base station. After the secondary base station encodes (such as Manchester encoding) and modulates the first information and transmits the interference signal, the interference signal can scramble the data reported by the zero-power terminal. When executing S1105, when the zero-power terminal reports data to the primary base station, the attacker node may also eavesdrop on the wireless signal which is a mixture of the interference signal and the data. For example, as illustrated in FIG. 12, the zero-power terminal can report data, and the data may be received by both the primary base station and the attacker node. Since the primary base station and the secondary base station share the first information (such as a pseudo random sequence), the first information can have the functions of encryption and decryption. Therefore, in the case where the primary base station and the attacker node can both receive the wireless signal which is a mixture of the data and the interference signal, the primary base station can remove the interference signal transmitted by the secondary base station, but even if the attacker node can also receive the wireless signal which is a mixture of interference signal and the data, the attacker node cannot remove the interference signal from the wireless signal because the attacker node does not have the first information. Ultimately, the attacker node cannot parse or recover the data reported by the zero-power terminal. It can be seen that, the above implementation manner can ensure the security of the data reported by the zero-power terminal.

It may be understood that, before executing S1102~S1106, it is necessary to ensure that the primary base station and the secondary base station have completed the processing of S1101 once, that is, the primary base station and the secondary base station have negotiated and obtained the first information at least once. In one example, before each execution of S1102~S1106, S1201 is executed once, that is, the primary base station and the secondary base station use the currently negotiated first information each time, which can reduce the possibility of the first information being parsed by eavesdroppers, and further ensure the security of the data reported by the zero-power terminal. In another example, after completing S1201 once, S1102~S1106 are executed multiple times, that is, after the primary base station and the secondary base station complete the negotiation for the first information once, in the subsequent multiple triggers of the zero-power terminal reporting data, the primary base station and the secondary base station use the same first information to generate and remove the interference signal. This example can reduce the occupation of communication resources between the primary base station and the secondary base station.

In FIG. 11 and FIG. 12, the primary base station can also be replaced by a primary AP, and the secondary base station can also be replaced by a secondary AP or a terminal device. The case where the primary base station is replaced by the primary AP and the secondary base station is replaced by the secondary AP or the terminal device is more suitable for the WIFI technology scenario, and the specific processing flow is similar to the above-mentioned example, and thus will not be repeated.

It may also be understood that, the first device and the third device can also be replaced by other devices and are applicable to the examples provided in FIG. 11 and FIG. 12. For other various possible devices and combinations of the first device and the third device, the illustration is the same as the aforementioned embodiments and therefore will not be repeated.

In some possible implementations, the interference signal is generated and transmitted by the first device according to the first information; and the first device triggers the second device to report data.

In the embodiment, the processing of the first device and the second device in the communication methods provided in FIG. 4 and FIG. 5 are mainly described in detail. In the embodiment, the first device may be any one of a second access network device, a second AP, and a second terminal device.

Specifically, before the first device receives a wireless signal, the method further includes the following. The first device transmits an interference signal and a trigger signal, where the interference signal is generated according to the first information, and the trigger signal is used to activate the second device.

In a preferred example of the embodiment, the first information may include a pseudo random sequence. For example, the first device may use a PRNG to generate the pseudo random sequence. In another example, the first information may be a random sequence. The detailed illustration of the pseudo random sequence or the random sequence is the same as that of the aforementioned embodiments and will not be repeated.

The first device may transmit the interference signal as follows. The first device may start to transmit the interference signal at a start transmission time of the interference signal and continues to transmit the interference signal within a transmission duration of the interference signal. The start transmission time of the interference signal may be a transmission time when the first device transmits the trigger signal, or the start transmission time of the interference signal may be before the transmission time when the first device transmits the trigger signal. The transmission duration of the interference signal may be pre-configured, or specified by the protocol, or preset. For example, the core network device or AF may pre-transmit configuration information to the first device, and the configuration information carries the transmission duration of the interference signal. For example, the transmission duration of the interference signal may be a preset default transmission duration, such as 10 seconds, 1 minute, 2 minutes, or longer or shorter, which is not exhaustive here. For another example, the transmission duration of the interference signal is specified by the protocol. It may be understood that, the acquisition method of the transmission duration of the interference signal is only an exemplary illustration. In actual processing, as long as the transmission duration of the interference signal can include the transmission time of the trigger signal and the time when the second device reports data, the transmission duration of the interference signal is within the protection scope of the embodiment, which is not exhaustively illustrated.

Optionally, the first device may determine the transmission time of the trigger signal according to a second preset configuration. Then, the first device may determine the transmission time of the trigger signal as the start transmission time of the interference signal, or the first device may determine the time ahead of the second time by a second specified time length as the start transmission time of the interference signal. The illustrations of the second preset configuration and the second specified time length are the same as those in the above embodiments and will not be repeated.

Optionally, the first device may determine to transmit the trigger signal upon reception of fourth indication information transmitted by the network device. In this case, the first device may determine the time when the fourth indication information is received as the transmission time of the trigger signal and the start transmission time of the interference signal. The detailed illustration of the fourth indication information is the same as that of the aforementioned embodiment and will not be repeated here.

The first device may transmit the interference signal as follows. The first device obtains second information according to a preset encoding method and the first information; the first device obtains a first signal by modulating the second information according to a preset modulation method; and the first device determines the first signal as the interference signal and transmits the interference signal.

The first information may be a pseudo random sequence, and correspondingly, the second information may be an encoded pseudo random sequence. The first device obtains the second information according to the preset encoding method and the first information, which specifically means that the first device obtains an encoded pseudo random sequence by encoding the pseudo random sequence according to the preset encoding method. It may be understood that, the aforementioned first information may also be other types of information such as a random sequence, which is only an exemplary illustration here, and all possible types of the first information are not exhaustively illustrated here.

The preset encoding method includes one of the following: Manchester encoding, non-return-to-zero inverted encoding, unipolar return-to-zero encoding, differential bi-phase encoding, Miller encoding, and bi-phase space encoding. In a preferred example, in the embodiment, Manchester encoding may be used as the preset encoding method. The preset modulation method includes one of the following: GFSK, ASK, FSK, PSK, and OOK. In a preferred example, in the embodiment, GFSK may be used as the preset modulation method.

Furthermore, after the first device transmits the trigger signal, the second device may perform the following. Before the second device reports data to the first device, the method further includes the following. The second device receives the trigger signal transmitted by the first device, where the trigger signal is used to activate the second device. Specifically, the trigger signal is used to power and activate the second device. That is, when the second device receives the trigger signal transmitted by the first device, the second device reports data to the first device.

The second device may report data to the first device as follows. The second device obtains encoded data by encoding the data according to the preset encoding method; the second device obtains a second signal by modulating the encoded data according to the preset modulation method; and the second device transmits the second signal to the first device. The data reported by the second device is data collected by the second device. The second device may collect data before receiving the trigger signal transmitted by the third device, or may collect data upon reception of the trigger signal transmitted by the third device. The time when the second device collects data is not limited in the embodiment.

The second device may obtain the second signal by modulating the encoded data according to the preset modulation method as follows. The second device generates a first data frame according to the encoded data; and the second device obtains the second signal by modulating the first data frame according to the preset modulation method. The second device may generate the first data frame according to the encoded data as follows. The second device generates the first data frame according to the encoded data and a preset first frame format.

The preset encoding method, the preset modulation method, detailed illustration of the first data frame, and detailed illustration of that the second device generates the second signal are the same as those in the aforementioned embodiment, and therefore will not be repeated.

Based on the illustration of the foregoing embodiments, it can be seen that, the second device may report data to the first device as follows. The second device encodes and modulates the data and then transmits the second signal to the first device. As the foregoing embodiments have already described that the third device also transmits the interference signal, so the second signal transmitted by the second device will be mixed with the interference signal during air transmission. Correspondingly, the wireless signal received by the first device is a wireless signal which is a mixture of the second signal and the interference signal, so the first device needs to generate the first signal according to the first information, and then remove the interference signal from the received wireless signal according to the first signal. The processing of the first device is described below.

The first device may obtain the data reported by the second device by removing the interference signal from the wireless signal according to the first information as follows. The first device obtains the second signal by removing the interference signal from the wireless signal according to the first signal, where the first signal is generated according to the first information. The first device obtains the data reported by the second device by processing the second signal. The manner in which the first device generates the first signal may include the following. The first device obtains the second information according to the preset encoding method and the first information; and the first device obtains the first signal by modulating the second information according to the preset modulation method.

The first device may obtain the second signal by removing the interference signal from the wireless signal according to the first signal as follows. Specifically, the first device obtains the second signal by subtracting the first signal from the wireless signal to remove the interference signal in the wireless signal.

The first device may obtain the data reported by the second device by processing the second signal as follows. The first device obtains the encoded data by demodulating the second signal according to a demodulation method corresponding to the preset modulation method; and the first device obtains data reported by the second device by decoding the encoded data according to a decoding method corresponding to the preset encoding method. The first device may obtain the encoded data by demodulating the second signal according to a demodulation method corresponding to the preset modulation method as follows. The first device obtains the first data frame by demodulating the second signal according to the demodulation method corresponding to the preset modulation method, and obtains the encoded data from the first data frame.

The specific processing of that the first device performs demodulation, decoding, generates the first signal, obtains the data reported by the second device, etc., is the same as that in the above-mentioned embodiments, and thus will not be described in detail.

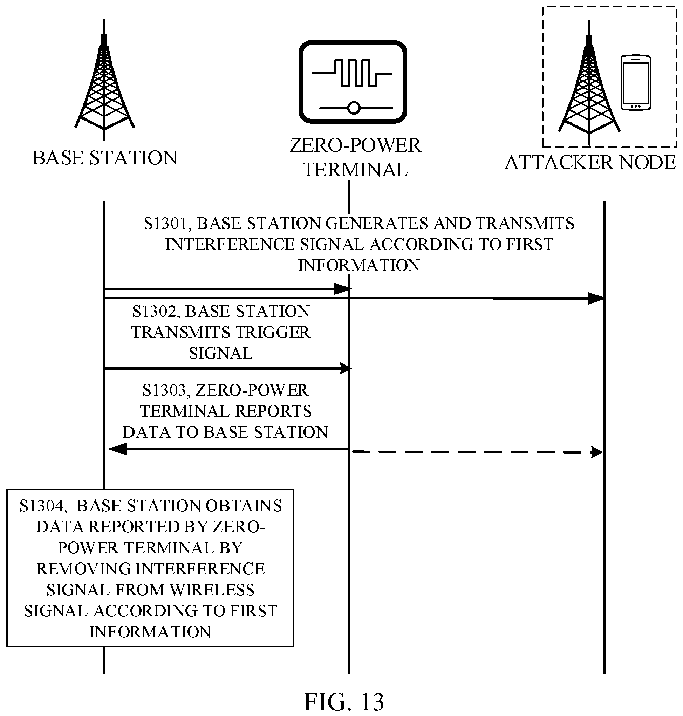

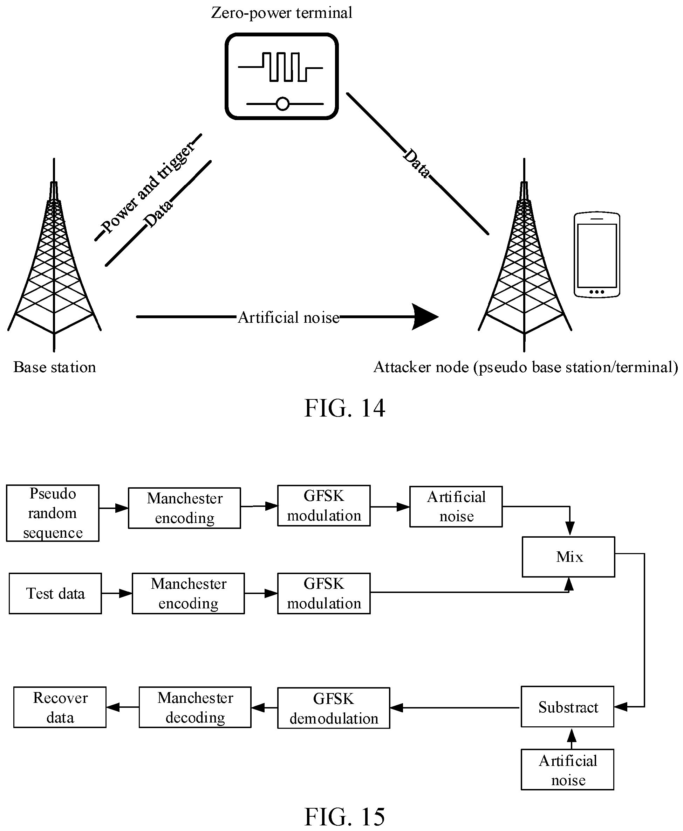

Taking the first device as a base station and the second device as a zero-power terminal, in combination with FIG. 13 and FIG. 14, another possible exemplary illustration of the communication methods provided in FIG. 4 to FIG. 5 is made, which specifically includes the following.

S1301, the base station generates and transmits an interference signal according to first information, i.e., that is, the interference signal is transmitted as illustrated in FIG. 14, where the interference signal can also interfere with an attacker node. In an example, the interference signal may also be called artificial noise.

S1302, the base station transmits a trigger signal. The trigger signal is used to power and activate the zero-power terminal. That is, the base station as illustrated in FIG. 14 powers and triggers the zero-power terminal.

The aforementioned S1301 and S1302 may be executed simultaneously, or S1301 may be executed earlier than S1302.

S1303, the zero-power terminal reports data to the base station. Specifically, the zero-power terminal may encode and modulate the data into a second signal, and transmit the second signal to the base station.

S1304, the base station receives a wireless signal, and obtains the data reported by the zero-power terminal by removing the interference signal from the wireless signal according to the first information. Here, the wireless signal received by the base station is a wireless signal which is a mixture of the data reported by the zero-power terminal and the interference signal, that is, the wireless signal is a mixture of the second signal and the interference signal.

In combination with FIG. 13 and FIG. 14, it can also be seen that, in addition to the base station and the zero-power terminal, there may also be an attacker node, that is, an eavesdropper' eavesdropping device, such as a pseudo base station or terminal as illustrated in FIG. 14. The attacker node may eavesdrop on the data reported by the zero-power terminal. In conjunction with FIG. 14, when executing S1301, the base station may transmit the interference signal indiscriminately, that is, the attacker node can also receive the interference signal transmitted by the base station. When executing S1303, when the zero-power terminal reports data to the base station, the attacker node may also eavesdrop on the wireless signal which is a mixture of the data and the interference signal. For example, as illustrated in FIG. 14, the zero-power terminal can report data, and the data may be received by both the base station and the attacker node. However, since the attacker node does not have the first information, the attacker node cannot remove the interference signal in the wireless signal, and finally the attacker node cannot obtain, through parsing, the data reported by the zero-power terminal. It can be seen that, the above-mentioned implementation manner can ensure the security of the data reported by the zero-power terminal. In FIG. 13 and FIG. 14, the base station can also be replaced by an AP to be applicable to the WIFI technology scenario, and the specific processing flow is similar to the aforementioned example, and thus will not be repeated. It may also be understood that, in the examples provided in FIG. 13 and FIG. 14, the base station can also be replaced by a first terminal device, and its specific processing is also similar to the aforementioned example, and thus will not be repeated.

For the solution provided in the embodiments of the present disclosure, Manchester encoding, Manchester decoding, GFSK modulation, and GFSK demodulation are used for experimental test in the simulation environment of software radio, which is illustrated as follows in combination with FIG. 15. Artificial noise of 1M is generated by encoding and GFSK modulation using a pseudo random sequence; and test data of 1K is generated. Then, the test data of 1K is subject to Manchester encoding and GFSK modulation, and then superimposed on the artificial noise of 1M. The two are mixed and transmitted, which plays the role of artificial noise protecting the data. Then, recovered data is obtained by removing the artificial noise of 1M from the superimposed data of the artificial noise and the test data and applying GFSK demodulation and Manchester decoding. Through the above simulation experimental test, the waveform of the recovered data finally obtained is the same as that of the test data.

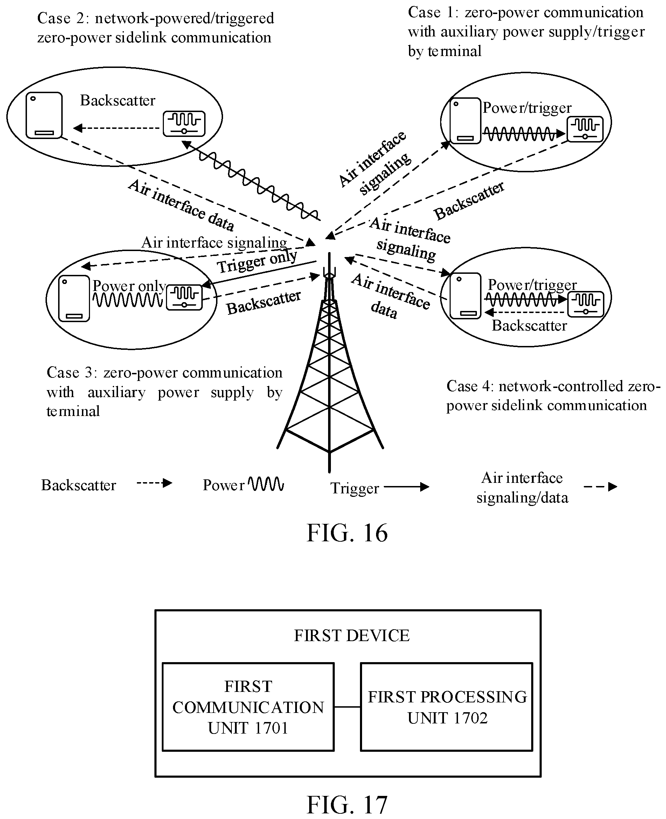

In conjunction with FIG. 16, different situations of a cellular and/or sidelink communication-based hybrid zero-power communication system are described in detail.

Case 1, zero-power communication triggered by auxiliary power supply of smart terminal: a zero-power terminal is powered and triggered by a smart terminal in a network, and a backscatter signal(s) of the zero-power terminal is received by a base station. The power supply and trigger operation of the smart terminal can be controlled by the base station through air interface signaling.

Case 2, network-powered/triggered zero-power sidelink communication: the base station provides wireless power and transmits trigger signaling to the zero-power terminal, and a backscatter signal(s) of the zero-power terminal is received by the smart terminal, to complete sidelink communication. Furthermore, the smart terminal transmits air interface data to the base station.

Case 3, zero-power communication with auxiliary power supply by smart terminal: the smart terminal in a network provides auxiliary power supply for a zero-power terminal, and a base station transmits trigger information to the zero-power terminal and receives a backscatter signal(s) from the zero-power terminal. The process of the smart terminal providing auxiliary power supply to the zero-power terminal can be controlled by the base station through air interface signaling.

Case 4, network-controlled zero-power sidelink communication: a smart terminal receives air interface signaling and data from a network. The smart terminal powers and triggers a zero-power terminal, and receives a backscatter signal(s) from the zero-power terminal, to complete sidelink communication.

The beneficial effect of the solution provided by the embodiments are described in combination with related technologies. In related technologies, such as 5G and 6G communication systems, encoding and modulation methods used in communication have relatively high requirements on power consumption and computing capability of communication devices such as terminals. For example, signal modulation technologies such as 16 quadrature amplitude modulation (QAM), 64QAM, 256QAM and even 1024QAM in traditional communication, which are commonly used modulation and coding methods for ordinary terminals, are a great challenge for zero-power terminals. The power consumption and computing capability of zero-power terminals are strictly limited, and thus the coding and modulation methods for zero-power terminals need to adapt to the software and hardware capabilities of zero-power terminals. Zero-power communication technology aims to allow terminals to exist in the form of battery-free, ultra-low-cost, ultra-low power consumption or even zero power consumption, and extremely small size. Therefore, simple coding and modulation methods are needed to achieve data transmission of zero-power terminals.

Research on secure coding focuses on improvements and designs related to security. These studies consider only security performance without taking power consumption into account, often involving highly complex encoding and decoding algorithms, which are unsuitable for low-power terminals. Therefore, low-power secure coding schemes need to strike a balance between security and complexity. Several coding schemes aimed at reducing power consumption mainly reduce coding complexity by designing coding methods, thereby reducing power consumption. These coding methods are designed and improved based on the structure of low density parity check (LDPC) and polar codes.

Specifically, one of the major issues of internet of things (IoT) and IWSN is energy efficiency and consumption. The scheme to reduce energy consumption is the use of forward error correction (FEC). To address this issue, a new error detection and correction code, namely a low complexity parity check (LCPC) code, is proposed, focusing on error correction of wireless connectivity in the IoT era. Compared with the LDPC code, the proposed LCPC code features shorter code lengths, low encoding and decoding complexity, reduced memory requirements, and a non-iterative decoding process, which can lower power consumption. This makes the LCPC code highly suitable for IoT and wireless sensor networks. Regarding the high computational complexity of multiplying an information sequence by a generator matrix in traditional encoder architectures, a low-complexity parallel quasi-cyclic LDPC encoder has been proposed to reduce encoding complexity and resource consumption. The core idea is to use a bit select (BS) algorithm to reduce hardware complexity, that is, select valid information bits based on the position set of non-zero elements in the first column of a submatrix, followed by encoding. This approach avoids operations on invalid information bits.

Non binary (NB)-LDPC codes demonstrate superior performance compared to binary codes, particularly for moderate codeword length and high-order modulation. However, decoding algorithms for NB-LDPC codes are highly complex. To address the issue of high decoding complexity in NB-LDPC codes, a new low-complexity joint encoding and decoding algorithm, called parity erasure algorithm (PCEA), has been proposed. That is, a parity check bit is added to each symbol of a codeword during encoding, and a series of simple operations are performed based on the parity check bits during decoding. Due to the small size of a parity check matrix, the algorithm is characterized by low complexity. It is also a general algorithm that can be combined with almost all NB-LDPC coding methods and message-passing-based decoding algorithms.

Polar codes are suitable for low-power wide area networks (LPWAN) due to their near-capacity performance with a narrowband physical uplink shared channel (NPUSCH) and reduced complexity in block length encoding. An efficient polar coding technique has been introduced for NPUSCH data transmission to improve transmission reliability and reduce the computational complexity of decoding. The proposed efficient polar coding technique uses the belief propagation (BP) decoding algorithm. The design metrics of the BP polar decoding algorithm, combined with a CRC-assisted early termination criterion, are presented. By integrating the BP algorithm with the CRC termination criterion, the number of decoding iterations is reduced, thereby achieving lower computational complexity.

Two commonly used methods for decoding polar codes are successive cancellation (SC) and BP. SC decoding is inherently sequential, while BP decoding can be executed in parallel. Therefore, BP decoding is more attractive for low-latency applications. However, compared with SC decoding, BP decoding exhibits some performance degradation at higher signal-to-noise ratios (SNRs). Therefore, a concatenated LDPC-polar code is proposed, where a shorter outer LDPC code is concatenated with a longer inner polar code, and the outer LDPC code is used to protect an information bit channel with a smaller leaf set size. Compared with baseline BP decoding, the proposed cascaded LDPC-Polar code only incurs a 1.84% additional complexity overhead per iteration.

From the above illustration, it can be found that, the low-power coding schemes in the related art mainly reduce the coding complexity by designing coding schemes, thereby reducing power consumption. However, while reducing the complexity, the security of the coding is challenged.

Since zero-power communication is different from traditional communication methods, the embodiments of the present disclosure adopts the method of adding an interference signal to prevent data transmitted by zero-power terminals from being intercepted and parsed by eavesdroppers. In addition, in the solutions provided by the aforementioned embodiments, only simple encoding and modulation schemes, such as Manchester encoding and GFSK modulation/demodulation, are required for zero-power terminals. Therefore, the security of data can be ensured while ensuring that energy consumption of the zero-power terminal is not increased and the processing capabilities of the zero-power terminal is not adjusted.

By adopting the solution provided by the embodiments, the interference signal is mixed in the wireless signal received by the first device, and after the first device removes the interference signal from the wireless signal according to the first information, the first device can obtain the data reported by the second device, where the first information is associated with the interference signal. In this way, the data reported by the second device is mixed with the interference signal during transmission. Since the first device has prior knowledge of the first information associated with the interference signal, the first device can remove the interference signal and correctly obtain the data reported by the second device. In contrast, other eavesdropping devices eavesdropping on the data reported by the second device cannot know the first information in advance, so other eavesdropping devices cannot correctly parse and obtain the data reported by the second device. It can be seen that, the solution provided by the embodiments can ensure the security of the data reported by the second device. In addition, since the aforementioned solution does not impose higher encoding and/or modulation requirements on zero-power terminals, it can ensure the security of the data reported by the second device while maintaining low power consumption, and thus the solution provided by the embodiments is particularly suitable for zero-power scenarios.

FIG. 17 is a schematic structural diagram of a first device according to an embodiment of the present disclosure. The first device includes a first communication unit 1701 configured to receive a wireless signal, and a first processing unit 1702 configured to obtain data reported by a second device by removing an interference signal from the wireless signal according to first information, where the first information is associated with the interference signal.

The interference signal is generated and transmitted by a third device according to the first information.

The first communication unit is configured to transmit the first information to the third device, or receive the first information transmitted by the third device.

The first communication unit is configured to transmit a trigger signal before receiving the wireless signal, where the trigger signal is used to activate the second device.

The first communication unit is configured to transmit first indication information to the third device before transmitting the trigger signal, where the first indication information is used to instruct the third device to transmit the interference signal.

The third device is one of the following: a first access network device, a first AP, and a first terminal device.

In the case where the third device is the first access network device, the first device is a second access network device or a second terminal device. In the case where the third device is the first AP, the first device is a second AP or a second terminal device. In the case where the third device is the first terminal device, the first device is a second access network device or a second AP.

The first communication unit is configured to transmit the interference signal and the trigger signal before receiving the wireless signal, where the interference signal is generated according to the first information; and the trigger signal is used to activate the second device.

The first processing unit is configured to obtain second information according to a preset encoding method and the first information. The first device obtains a first signal by modulating the second information according to a preset modulation method. The first device takes the first signal as the interference signal and transmits the interference signal through the first communication unit.

The first device is one of the following: a second access network device, a second AP, and a second terminal device.

The first processing unit is configured to obtain a second signal by removing the interference signal from the wireless signal according to the first signal, where the first signal is generated according to the first information. The first processing unit is configured to obtain data reported by the second device by processing the second signal.

The first processing unit is configured to obtain the second information according to the preset encoding method and the first information; and to obtain the first signal by modulating the second information according to the preset modulation method.

The first processing unit is configured to obtain encoded data by demodulating the second signal according to a demodulation method corresponding to the preset modulation method; and obtain the data reported by the second device by decoding the encoded data according to a decoding method corresponding to the preset encoding method.

The first processing unit is configured to obtain a first data frame by demodulating the second signal according to the demodulation method corresponding to the preset modulation method, and obtain the encoded data from the first data frame.

The first data frame contains a first field, where the first field carries the encoded data.

The first data frame also contains at least one of: a second field, where the second field carries a preamble for transceiving synchronization; a third field, where the third field carries second indication information, and the second indication information indicates the length of the first field; or a fourth field, where the fourth field carries a check code.

The preset encoding method includes one of the following: Manchester encoding, non-return-to-zero inverted encoding, unipolar return-to-zero encoding, differential bi-phase encoding, Miller encoding, and bi-phase space encoding.

The preset modulation method includes one of the following: GFSK, ASK, FSK, PSK, and OOK.

The first information includes a pseudo random sequence, or the first information includes relevant information for generating the pseudo random sequence.

The second device is a zero-power terminal.

The first device of the embodiment of the present disclosure can realize the corresponding functions of the first device in the aforementioned information verification method embodiment. For the processes, functions, implementation methods, and beneficial effects corresponding to each module (sub-module, unit, component, etc.) in the first device, reference can be made to the corresponding illustration in the above method embodiments, which will not be repeated here. It may be noted that, the functions of each module (sub-module, unit, or component, etc.) in the first device of the embodiment of the present disclosure can be implemented by different modules (sub-modules, units, components, etc.), or by the same module (sub-module, unit, component, etc.).

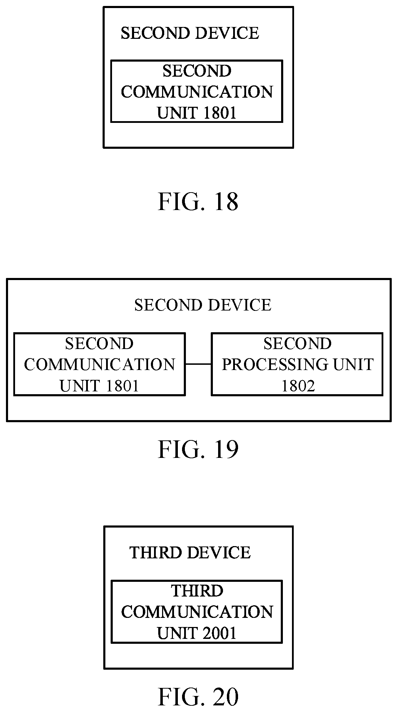

FIG. 18 is a schematic structural diagram of a second device according to an embodiment of the present disclosure. The second device includes a second communication unit 1801 configured to report data to the first device, where the data is used to be mixed with an interference signal during transmission to obtain a wireless signal.

Based on FIG. 18, as illustrated in FIG. 19, the second device further includes a second processing unit 1802 configured to obtain encoded data by encoding the data according to a preset encoding method, and to obtain a second signal by modulating the encoded data according to a preset modulation method; and a second communication unit 1801 configured to transmit the second signal to the first device.

The second processing unit is configured to generate a first data frame according to the encoded data; and to obtain the second signal by modulating the first data frame according to the preset modulation method.

The first data frame contains a first field, where the first field carries the encoded data.

The first data frame further contains at least one of: a second field, where the second field carries a preamble for transceiving synchronization; a third field, where the third field carries second indication information, and the second indication information indicates the length of the first field; a fourth field, where the fourth field carries a check code.

The second communication unit is configured to receive a trigger signal transmitted by a third device before reporting the data to the first device, where the trigger signal is used to activate the second device.

The third device is one of the following: a first access network device, a first AP, and a first terminal device.

In the case where the third device is the first access network device, the first device is a second access network device or a second terminal device. In the case where the third device is the first AP, the first device is a second AP or a second terminal device. In the case where the third device is the first terminal device, the first device is a second access network device or a second AP.

The second communication unit is configured to receive a trigger signal transmitted by the first device before reporting the data to the first device, where the trigger signal is used to activate the second device. The first device is one of the following: a second access network device, a second AP, and a second terminal device.

The second device is a zero-power terminal.

The second device of the embodiment of the present disclosure can realize the corresponding functions of the second device in the aforementioned information verification method embodiment. For the processes, functions, implementation methods, and beneficial effects corresponding to each module (sub-module, unit, component, etc.) in the second device, reference can be made to the corresponding illustration in the above method embodiments, which will not be repeated here. It may be noted that the functions of each module (sub-module, unit or component, etc.) in the second device of the embodiment of the present disclosure can be implemented by different modules (sub-modules, units, components, etc.), or by the same module (sub-module, unit, component, etc.).

FIG. 20 illustrates a third device according to an embodiment of the present disclosure. The third device includes a third communication unit 2001 configured to transmit an interference signal, where the interference signal is associated with first information, and the interference signal is used to interfere with data reported by a second device.

The third communication unit is configured to transmit the first information to the first device before transmitting the interference signal; or to receive the first information transmitted by the first device before transmitting the interference signal.

The third communication unit is configured to transmit the interference signal upon reception of first indication information, where the first indication information is used to instruct the third device to transmit the interference signal.

The third communication unit is configured to transmit a trigger signal when transmitting the interference signal, where the trigger signal is used to activate the second device.

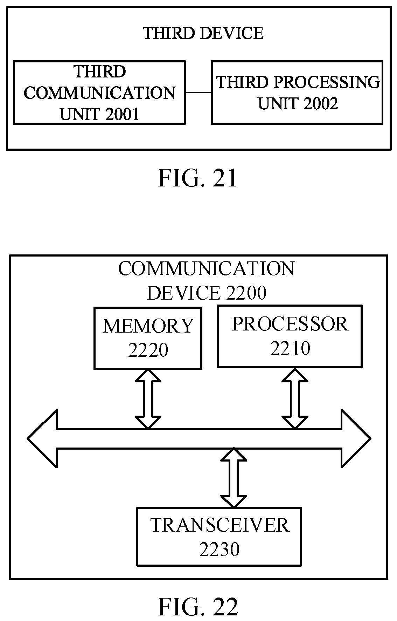

Based on FIG. 20, as illustrated in FIG. 21, the third device further includes a third processing unit 2002 configured to obtain second information according to a preset encoding method and the first information; to obtain a first signal by modulating the second information according to a preset modulation method; and to take the first signal as the interference signal and transmit the interference signal through the third communication unit.

The preset encoding method includes one of the following: Manchester encoding, non-return-to-zero inverted encoding, unipolar return-to-zero encoding, differential bi-phase encoding, Miller encoding, and bi-phase space encoding.

The preset modulation method includes one of the following: GFSK, ASK, FSK, PSK, and OOK.

The first information includes a pseudo random sequence, or the first information includes relevant information for generating the pseudo random sequence.

The third device is one of the following: a first access network device, a first AP, and a first terminal device.

In the case where the third device is the first access network device, the first device is a second access network device or a second terminal device. In the case where the third device is the first AP, the first device is a second AP or a second terminal device. In the case where the third device is the first terminal device, the first device is a second access network device or a second AP.

The second device is a zero-power device.

The third device of the embodiment of the present disclosure can realize the corresponding functions of the third device in the aforementioned information verification method embodiment. For the processes, functions, implementation methods, and beneficial effects corresponding to each module (sub-module, unit, component, etc.) in the third device, reference can be made to the corresponding illustration in the above method embodiment, which will not be repeated here. It may be noted that, the functions of each module (sub-module, unit, component, etc.) in the third device of the embodiment of the present disclosure can be implemented by different modules (sub-modules, units, components, etc.), or by the same module (sub-module, unit, component, etc.).

FIG. 22 is a schematic structural diagram of a communication device 2200 according to an embodiment of the present disclosure. The communication device 2200 includes a processor 2210, and the processor 2210 can call and run a computer program from a memory so that the communication device 2200 implements the method in the embodiments of the present disclosure.

In a possible implementation, the communication device 2200 may further include a memory 2220. The processor 2210 may call and run a computer program from the memory 2220, so that the communication device 2200 implements the method in the embodiments of the present disclosure.

The memory 2220 may be a separate device independent of the processor 2210, or may be integrated into the processor 2210.

In a possible implementation, the communication device 2200 may further include a transceiver 2230, and the processor 2210 may control the transceiver 2230 to communicate with other devices, specifically, may transmit information or data to other devices, or receive information or data transmitted by other devices.

The transceiver 2230 may include a transmitter and a receiver. The transceiver 2230 may further include an antenna, and there may be one or more antennas.

In a possible implementation, the communication device 2200 may be the first device of the embodiment of the present disclosure, and the communication device 2200 may implement the corresponding process implemented by the first device in each of the methods of the embodiments of the present disclosure, which will not be described in detail here for the sake of brevity. In a possible implementation, the communication device 2200 may be the second device of the embodiment of the present disclosure, and the communication device 2200 may implement the corresponding process implemented by the second device in each of the methods of the embodiments of the present disclosure, which will not be described in detail here for the sake of brevity. In a possible implementation, the communication device 2200 may be the third device of the embodiment of the present disclosure, and the communication device 2200 may implement the corresponding process implemented by the third device in each of the methods of the embodiments of the present disclosure, which will not be described in detail here for the sake of brevity.

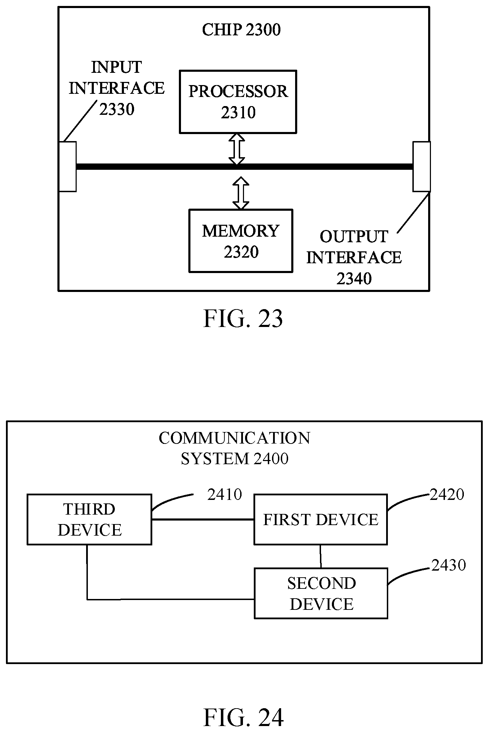

FIG. 23 is a schematic structural diagram of a chip 2300 according to an embodiment of the present disclosure. The chip 2300 includes a processor 2310, and the processor 2310 can call and run a computer program from a memory to implement the method in the embodiments of the present disclosure.

In a possible implementation, the chip 2300 may further include a memory 2320. The processor 2310 may call and run a computer program from the memory 2320 to implement the method performed by the access network device or the first core network device in the embodiments of the present disclosure. The memory 2320 may be a separate device independent of the processor 2310, or may be integrated in the processor 2310.

In a possible implementation, the chip 2300 may further include an input interface 2330. The processor 2310 may control the input interface 2330 to communicate with other devices or chips, and specifically, may obtain information or data transmitted by other devices or chips. In a possible implementation, the chip 2300 may further include an output interface 2340. The processor 2310 may control the output interface 2340 to communicate with other devices or chips, and specifically, may output information or data to other devices or chips.

In a possible embodiment, the chip may be applied to the third device in the embodiment of the present disclosure, and the chip may implement the corresponding processes implemented by the third device in each of methods of the embodiments of the present disclosure, which will not be repeated here for the sake of brevity. In a possible embodiment, the chip may be applied to the first device in the embodiment of the present disclosure, and the chip may implement the corresponding processes implemented by the first device in each of the methods of the embodiments of the present disclosure, which will not be repeated here for the sake of brevity. In a possible embodiment, the chip may be applied to the second device in the embodiment of the present disclosure, and the chip may implement the corresponding processes implemented by the second device in each of the methods of the embodiments of the present disclosure, which will not be repeated here for the sake of brevity. The chips applied to the third device, the first device, and the second device may be the same chip or different chips.

It may be understood that, the chip mentioned in the embodiments of the present disclosure can also be called a system-level chip, a system chip, a chip system, a system-on-chip, etc.

The processor mentioned above may be a general-purpose processor, a digital signal processor (DSP), a field programmable gate array (FPGA), an application specific integrated circuit (ASIC) or other programmable logic devices, a transistor logic device, a discrete hardware component, etc. The general-purpose processor mentioned above may be a microprocessor or any conventional processor, etc.

The memory mentioned above may be a volatile memory or a non-volatile memory, or may include both volatile and non-volatile memories. The non-volatile memory may be a read -only memory (ROM), a programmable ROM (PROM), an erasable programmable read-only memory (EPROM), an electrically erasable programmable read-only memory (EEPROM), or a flash memory. The volatile memory may be a random access memory (RAM).

It may be understood that, the above-mentioned memory is exemplary but not restrictive. For example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), etc. That is to say, the memory in the embodiments of the present disclosure is intended to include but not limited to these and any other suitable types of memory.

FIG. 24 is a schematic block diagram of a communication system 2400 according to an embodiment of the present disclosure. The communication system 2400 includes a third device 2410, a first device 2420, and a second device 2430. The third device 2410 can be configured to implement the corresponding functions implemented by the third device in the above methods, the first device 2420 can be configured to implement the corresponding functions implemented by the first device in the above method, and the second device 2430 can be used to implement the corresponding functions implemented by the second device in the above methods, which will not be repeated here for the sake of brevity.

All or some of the above embodiments can be implemented through software, hardware, firmware, or any other combination thereof. When implemented by software, all or some the above embodiments can be implemented in the form of a computer program product. The computer program product includes one or more computer instructions. When the computer instructions are applied and executed on a computer, all or some of the operations or functions of the embodiments of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

It may also be understood that, in various method embodiments of the disclosure, the magnitude of a sequence number of each of the foregoing processes does not mean an execution order, and an execution order of each process should be determined according to a function and an internal logic of the process, which shall not constitute any limitation to an implementation process of embodiments of the disclosure.

Those skilled in the art can clearly understand that, for the convenience and brevity of illustration, for the specific operation processes of the systems, devices, and units described above, reference can be made to the corresponding processes in the aforementioned method embodiments, which will not be repeated here.

The above is only a specific implementation of the present disclosure, but the protection scope of the present disclosure is not limited thereto. Any person skilled in the art who is familiar with the present technical field can easily think of changes or substitutions within the technical scope disclosed in the present disclosure, which may be included in the protection scope of the present disclosure. Therefore, the protection scope of the present disclosure may be determined according to the protection scope of the claims.

## Claims

1. A communication method, comprising:
receiving, by a first device, a wireless signal; and
obtaining, by the first device, data reported by a second device by removing an interference signal from the wireless signal according to first information, wherein the first information is associated with the interference signal.

2. The method according to claim 1, wherein the interference signal is generated and transmitted by a third device according to the first information.

3. The method according to claim 2, wherein before receiving, by the first device, the wireless signal, the method further comprises:
transmitting, by the first device, the first information to the third device; or
receiving, by the first device, the first information transmitted by the third device.

4. The method according to claim 3, wherein before receiving, by the first device, the wireless signal, the method further comprises:
transmitting, by the first device, a trigger signal, wherein the trigger signal is used to activate the second device.

5. The method according to claim 4, wherein before transmitting, by the first device, the trigger signal, the method further comprises:
transmitting, by the first device, first indication information to the third device, wherein the first indication information is used to instruct the third device to transmit the interference signal.

6. The method according to any one of claims 2 to 5, wherein the third device is one of the following: a first access network device, a first access point (AP), and a first terminal device.

7. The method according to claim 6, wherein
in a case where the third device is the first access network device, the first device is a second access network device or a second terminal device;
in a case where the third device is the first AP, the first device is a second AP or the second terminal device; or
in a case where the third device is the first terminal device, the first device is the second access network device or the second AP.

8. The method according to claim 1, wherein before receiving, by the first device, the wireless signal, the method further comprises:
transmitting, by the first device, the interference signal and a trigger signal, wherein the interference signal is generated according to the first information; and the trigger signal is used to activate the second device.

9. The method according to claim 8, wherein transmitting, by the first device, the interference signal, comprises:
obtaining, by the first device, second information according to a preset encoding method and the first information;
obtaining, by the first device, a first signal by modulating the second information according to a preset modulation method; and
taking, by the first device, the first signal as the interference signal, and transmitting, by the first device, the interference signal.

10. The method according to claim 8 or 9, wherein the first device is one of the following: a second access network device, a second AP, and a second terminal device.

11. The method according to any one of claims 1 to 10, wherein obtaining, by the first device, the data reported by the second device by removing the interference signal from the wireless signal according to the first information, comprises:
obtaining, by the first device, second signal by removing the interference signal from the wireless signal according to first signal, wherein the first signal is generated according to the first information; and
obtaining, by the first device, the data reported by the second device by processing the second signal.

12. The method according to claim 11, further comprising:
obtaining, by the first device, second information according to a preset encoding method and the first information; and
obtaining, by the first device, the first signal by modulating the second information according to a preset modulation method.

13. The method according to claim 11 or 12, wherein obtaining, by the first device, the data reported by the second device by processing the second signal, comprises:
obtaining, by the first device, encoded data by demodulating the second signal according to a demodulation method corresponding to a preset modulation method; and
obtaining, by the first device, the data reported by the second device by decoding the encoded data according to a decoding method corresponding to a preset encoding method.

14. The method according to claim 13, wherein obtaining, by the first device, the encoded data by demodulating the second signal according to the demodulation method corresponding to the preset modulation method, comprises:
obtaining, by the first device, a first data frame by demodulating the second signal according to the demodulation method corresponding to the preset modulation method, and obtaining, by the first device, the encoded data from the first data frame.

15. The method according to claim 14, wherein the first data frame contains a first field, wherein the first field carries the encoded data.

16. The method according to claim 15, wherein the first data frame further contains at least one of:
a second field, wherein the second field carries a preamble for transceiving synchronization;
a third field, wherein the third field carries second indication information, wherein the second indication information indicates a length of the first field; or
a fourth field, wherein the fourth field carries a check code.

17. The method according to any one of claims 9, 12, and 13, wherein the preset encoding method comprises one of the following: Manchester encoding, non-return-to-zero inverted encoding, unipolar return-to-zero encoding, differential bi-phase encoding, Miller encoding, and bi-phase space encoding.

18. The method according to any one of claims 9 and 12-14, wherein the preset modulation method comprises one of the following: Gaussian frequency shift keying (GFSK), amplitude shift keying (ASK), frequency shift keying (FSK), phase shift keying (PSK), and on-off keying (OOK).

19. The method according to any one of claims 1 to 18, wherein the first information comprises a pseudo random sequence, or the first information comprises relevant information for generating the pseudo random sequence.

20. The method according to any one of claims 1 to19, wherein the second device is a zero-power terminal.

21. A communication method, comprising:
reporting, by a second device, data to a first device, wherein the data is used to be mixed with an interference signal during transmission to obtain a wireless signal.

22. The method according to claim 21, wherein reporting, by the second device, the data to the first device, comprises:
obtaining, by the second device, encoded data according to a preset encoding method;
obtaining, by the second device, a second signal by modulating the encoded data according to a preset modulation method; and
transmitting, by the second device, the second signal to the first device.

23. The method according to claim 22, wherein obtaining, by the second device, the second signal by modulating the encoded data according to the preset modulation method, comprises:
generating, by the second device, a first data frame according to the encoded data; and
obtaining, by the second device, the second signal by modulating the first data frame according to the preset modulation method.

24. The method according to claim 23, wherein the first data frame contains a first field, wherein the first field carries the encoded data.

25. The method according to claim 24, wherein the first data frame further contains at least one of:
a second field, wherein the second field carries a preamble for transceiving synchronization;
a third field, wherein the third field carries second indication information, wherein the second indication information indicates a length of the first field; or
a fourth field, wherein the fourth field carries a check code.

26. The method according to any one of claims 21 to 25, wherein before reporting, by the second device, the data to the first device, the method further comprises:
receiving, by the second device, a trigger signal transmitted by a third device, wherein the trigger signal is used to activate the second device.

27. The method according to claim 26, wherein the third device is one of the following: a first access network device, a first access point (AP), and a first terminal device.

28. The method according to claim 27, wherein
in a case where the third device is the first access network device, the first device is a second access network device or a second terminal device;
in a case where the third device is the first AP, the first device is a second AP or the second terminal device; or
in a case where the third device is the first terminal device, the first device is the second access network device or the second AP.

29. The method according to any one of claims 21 to 25, wherein before reporting, by the second device, the data to the first device, the method further comprises:
receiving, by the second device, a trigger signal transmitted by the first device, wherein the trigger signal is used to activate the second device.

30. The method according to claim 29, wherein the first device is one of the following: a second access network device, a second AP, and a second terminal device.

31. The method according to any one of claims 21-30, wherein the second device is a zero-power terminal.

32. A communication method, comprising:
transmitting, by a third device, an interference signal, wherein the interference signal is associated with first information, and the interference signal is used to interfere with data reported by a second device.

33. The method according to claim 32, wherein before transmitting, by the third device, the interference signal, the method further comprises:
transmitting, by the third device, the first information to the first device; or
receiving by the first device, the first information transmitted by the first device.

34. The method according to claim 33, wherein transmitting, by the third device, the interference signal, comprises:
transmitting, by the third device, the interference signal upon reception of first indication information, wherein the first indication information is used to instruct the third device to transmit the interference signal.

35. The method according to claim 33, wherein when the third device transmits the interference signal, the method further comprises:
transmitting, by the third device, a trigger signal, wherein the trigger signal is used to activate the second device.

36. The method according to any one of claims 33 to 35, wherein transmitting, by the third device, the interference signal, comprises:
obtaining, by the third device, second information according to a preset encoding method and the first information;
obtaining, by the third device, the first signal, by modulating the second information according to a preset modulation method; and
taking, by the first device, the first signal as the interference signal, and transmitting, by the first device, the interference signal.

37. The method according to claim 36, wherein the preset encoding method comprises one of the following: Manchester encoding, non-return-to-zero inverted encoding, unipolar return-to-zero encoding, differential bi-phase encoding, Miller encoding, and bi-phase space encoding.

38. The method according to claim 36, wherein the preset modulation method comprises one of the following: Gaussian frequency shift keying (GFSK), amplitude shift keying (ASK), frequency shift keying (FSK), phase shift keying (PSK), and on-off keying (OOK).

39. The method according to any one of claims 32 to 36, wherein the first information comprises a pseudo random sequence, or the first information comprises relevant information for generating the pseudo random sequence.

40. The method according to any one of claims 32 to 39, wherein the third device is one of the following: a first access network device, a first access point (AP), and a first terminal device.

41. The method according to claim 40, wherein
in the case where the third device is the first access network device, the first device is a second access network device or a second terminal device;
in the case where the third device is the first AP, the first device is a second AP or the second terminal device; or
in the case where the third device is the first terminal device, the first device is the second access network device or the second AP.

42. The method according to any one of claims 32 to 41, wherein the second device is a zero-power device.

43. A first device, comprising:
a first communication unit configured to receive a wireless signal; and
a first processing unit configured to obtain data reported by a second device by removing an interference signal from the wireless signal according to first information, wherein the first information is associated with the interference signal.

44. The first device according to claim 43, wherein the interference signal is generated and transmitted by a third device according to the first information.

45. The first device according to claim 44, wherein the first communication unit is configured to transmit the first information to the third device; or to receive the first information transmitted by the third device.

46. The first device according to claim 45, wherein the first communication unit is configured to transmit a trigger signal before receiving the wireless signal, wherein the trigger signal is used to activate the second device.

47. The first device according to claim 46, wherein the first communication unit is configured to transmit first indication information to the third device before transmitting the trigger signal, wherein the first indication information is used to instruct the third device to transmit the interference signal.

48. The first device according to any one of claims 44 to 47, wherein the third device is one of the following: a first access network device, a first access point (AP), and a first terminal device.

49. The first device according to claim 48, wherein
in the case where the third device is the first access network device, the first device is a second access network device or a second terminal device;
in the case where the third device is the first AP, the first device is a second AP or the second terminal device; or
in the case where the third device is the first terminal device, the first device is the second access network device or the second AP.

50. The first device according to claim 43, wherein the first communication unit is configured to transmit the interference signal and a trigger signal before receiving the wireless signal, wherein the interference signal is generated according to the first information, and the trigger signal is used to activate the second device.

51. The first device according to claim 50, wherein the first processing unit is configured to obtain second information according to a preset encoding method and the first information; the first device is configured to obtain a first signal by modulating the second information according to a preset modulation method; and the first device is configured to take the first signal as the interference signal and transmit the interference signal through the first communication unit.

52. The first device according to claim 50 or 51, wherein the first device is one of the following: a second access network device, a second AP, and a second terminal device.

53. The first device according to any one of claims 43 to 52, wherein the first processing unit is configured to obtain a second signal by removing the interference signal from the wireless signal according to first signal, wherein the first signal is generated according to the first information; and the first processing unit is configured to obtain the data reported by the second device by processing the second signal.

54. The first device according to claim 53, wherein the first processing unit is configured to obtain second information according to a preset encoding method and the first information; and to obtain the first signal by modulating the second information according to a preset modulation method.

55. The first device according to claim 53 or 54, wherein the first processing unit is configured to obtain encoded data by demodulating the second signal according to a demodulation method corresponding to a preset modulation method; and to obtain the data reported by the second device by decoding the encoded data according to a decoding method corresponding to the preset encoding method.

56. The first device according to claim 55, wherein the first processing unit is configured to obtain a first data frame by demodulating the second signal according to the demodulation method corresponding to the preset modulation method, and to obtain the encoded data from the first data frame.

57. The first device according to claim 56, wherein the first data frame contains a first field, wherein the first field carries the encoded data.

58. The first device according to claim 57, wherein the first data frame further contains at least one of: a second field, wherein the second field carries a preamble for transceiving synchronization; a third field, wherein the third field carries second indication information, and the second indication information indicates a length of the first field; a fourth field, wherein the fourth field carries a check code.

59. The first device according to any one of claims 51, 54, and 55, wherein the preset encoding method comprises one of the following: Manchester encoding, non-return-to-zero inverted encoding, unipolar return-to-zero encoding, differential bi-phase encoding, Miller encoding, and bi-phase space encoding.

60. The first device according to any one of claims 51 and 54 to 56, wherein the preset modulation method comprises one of the following: Gaussian frequency shift keying (GFSK), amplitude shift keying (ASK), frequency shift keying (FSK), phase shift keying (PSK), and on-off keying (OOK).

61. The first device according to any one of claims 43 to 60, wherein the first information comprises a pseudo random sequence, or the first information comprises relevant information for generating the pseudo random sequence.

62. The first device according to any one of claims 43 to 61, wherein the second device is a zero-power terminal.

63. A second device, comprising:
a second communication unit configured to report data to the first device, wherein the data is used to be mixed with an interference signal during transmission to obtain a wireless signal.

64. The second device according to claim 63, further comprising:
a second processing unit configured to obtain encoded data by encoding the data according to a preset encoding method; and to obtain a second signal by modulating the encoded data according to a preset modulation method; and
a second communication unit configured to transmit the second signal to the first device.

65. The second device according to claim 64, wherein the second processing unit is configured to generate a first data frame according to the encoded data; and to obtain the second signal by modulating the first data frame according to the preset modulation method.

66. The second device according to claim 65, wherein the first data frame contains a first field, wherein the first field carries the encoded data.

67. The second device according to claim 66, wherein the first data frame further contains at least one of: a second field, wherein the second field carries a preamble for transceiving synchronization; a third field, wherein the third field carries second indication information, and the second indication information indicates a length of the first field; or a fourth field, wherein the fourth field carries a check code.

68. The second device according to any one of claims 63 to 67, wherein the second communication unit is configured to receive a trigger signal transmitted by a third device before reporting the data to the first device, wherein the trigger signal is used to activate the second device.

69. The second device according to claim 68, wherein the third device is one of the following: a first access network device, a first access point (AP), and a first terminal device.

70. The second device according to claim 69, wherein
in the case where the third device is the first access network device, the first device is a second access network device or a second terminal device;
in the case where the third device is the first AP, the first device is a second AP or the second terminal device; or
in the case where the third device is the first terminal device, the first device is the second access network device or the second AP.

71. The second device according to any one of claims 63 to 67, wherein the second communication unit is configured to receive a trigger signal transmitted by the first device before reporting the data to the first device, wherein the trigger signal is used to activate the second device.

72. The second device according to claim 71, wherein the first device is one of the following: a second access network device, a second AP, and a second terminal device.

73. The second device according to any one of claims 63 to 72, wherein the second device is a zero-power terminal.

74. A third device, comprising:
a third communication unit configured to transmit an interference signal, wherein the interference signal is associated with first information, and the interference signal is used to interfere with data reported by a second device.

75. The third device according to claim 74, wherein the third communication unit is configured to transmit the first information to the first device before transmitting the interference signal; or
the third communication unit is configured to receive the first information transmitted by the first device before transmitting the interference signal.

76. The third device according to claim 75, wherein the third communication unit is configured to transmit the interference signal upon reception of first indication information, wherein the first indication information is used to instruct the third device to transmit the interference signal.

77. The third device according to claim 76, wherein the third communication unit is configured to transmit a trigger signal when transmitting the interference signal, wherein the trigger signal is used to activate the second device.

78. The third device according to any one of claims 74 to 77, further comprising:
a third processing unit configured to obtain second information according to a preset encoding method and the first information; to obtain a first signal by modulating the second information according to a preset modulation method; and to take the first signal as the interference signal and transmit the interference signal through the third communication unit.

79. The third device according to claim 78, wherein the preset encoding method comprises one of the following: Manchester encoding, non-return-to-zero inverted encoding, unipolar return-to-zero encoding, differential bi-phase encoding, Miller encoding, and bi-phase space encoding.

80. The third device according to claim 78, wherein the preset modulation method comprises one of the following: Gaussian frequency shift keying (GFSK), amplitude shift keying (ASK), frequency shift keying (FSK), phase shift keying (PSK), and on-off keying (OOK).

81. The third device according to any one of claims 74 to 80, wherein the first information comprises a pseudo random sequence, or the first information comprises relevant information for generating the pseudo random sequence.

82. The third device according to any one of claims 74 to 81, wherein the third device is one of the following: a first access network device, a first AP, and a first terminal device.

83. The third device according to claim 82, wherein
in the case where the third device is the first access network device, the first device is a second access network device or a second terminal device;
in the case where the third device is the first AP, the first device is a second AP or the second terminal device; or
in the case where the third device is the first terminal device, the first device is the second access network device or the second AP.

84. The third device according to any one of claims 74 to 83, wherein the second device is a zero-power device.

85. A first device, comprising: a transceiver, a processor, and a memory, wherein the memory is configured to store a computer program, and the processor is configured to call and run the computer program stored in the memory, so that the first device executes the method of any one of claims 1 to 20.

86. A second device, comprising: a transceiver, a processor, and a memory, wherein the memory is configured to store a computer program, and the processor is configured to call and run the computer program stored in the memory, so that the first device executes the method of any one of claims 21 to 31.

87. A third device, comprising: a transceiver, a processor, and a memory, wherein the memory is configured to store a computer program, and the processor is configured to call and run the computer program stored in the memory, so that the first device executes the method of any one of claims 32 to 42.

88. A chip, comprising: a processor, configured to call and run a computer program from a memory, so that a device equipped with the chip executes a method of any one of claims 1 to 20, or claims 21 to 31, or claims 32 to 42.

89. A computer-readable storage medium for storing a computer program which, when executed by a device, causes the device to perform the method of any one of claims 1 to 20, or claims 21 to 31, or claims 32 to 42.

90. A computer program product comprising computer program instructions, the computer program instructions causing a computer to execute the method of any one of claims 1 to 20, or claims 21 to 31, or claims 32 to 42.

91. A computer program, the computer program causing a computer to execute the method of any one of claims 1 to 20, or claims 21 to 31, or claims 32 to 42.
